# EUROPEAN PATENT SPECIFICATION

(11) **EP 3 575 500 B1**
(45) Date of publication and mention of the grant of the patent: **22.12.2021**
(21) Application number: 18810642.1
(22) Date of filing: 29.05.2018
(51) Int. Cl.: E02F 9/16, E02F 9/24, B60R 21/11, B62D 33/063, E02F 3/32

(54) **SMALL HYDRAULIC SHOVEL**
KLEINER HYDRAULIKSCHAUFELBAGGER
PETITE PELLE HYDRAULIQUE

(30) Priority: 29.05.2017 JP 2017105529
(43) Date of publication of application: 04.12.2019
(73) Proprietor: Hitachi Construction Machinery Tierra Co., Ltd., Koka-shi, Shiga 528-0061 (JP)
(72) Inventor: SUMINO, Tetsuya, Koka-shi Shiga 528-0061 (JP); MAEDA, Kohei, Koka-shi Shiga 528-0061 (JP); KAWAMOTO, Junya, Koka-shi Shiga 528-0061 (JP)
(74) Representative: Manitz Finsterwald Patent- und Rechtsanwaltspartnerschaft mbB
(86) International application number: PCT/JP2018/020526
(87) International publication number: WO 2018/221506

(56) References cited:
- EP-A1- 2 980 004
- GB-A- 1 493 748
- JP-A- 2005 271 630
- JP-A- 2012 077 536
- JP-A- 2016 084 614
- JP-A- 2016 204 889
- JP-U- H0 589 551
- JP-U- S5 338 707
- US-A1- 2011 248 488

## Description

### TECHNICAL FIELD

The present invention relates to a small-sized hydraulic excavator that is provided with a protection member for protecting an operator sitting on a driver's seat, for example.

### BACKGROUND ART

Hydraulic excavators include a small-sized hydraulic excavator for working in a narrow work site or the like. The small-sized hydraulic excavator is generally called a mini excavator, and is used for a demolition work inside a building and for an excavating work in a narrow street area or the like. There is a small-sized hydraulic excavator whose machine weight is reduced to approximately one ton, for example. In the small-sized hydraulic excavator, an entire vehicle body including a lower traveling structure and an upper revolving structure is compactly formed.

A small-sized hydraulic excavator includes an automotive lower traveling structure, an upper revolving structure mounted on the lower traveling structure to be capable of revolving thereon, and a front device that is provided on a front side of the upper revolving structure to be capable of lifting and tilting thereto.

The upper revolving structure includes a revolving frame provided with a front device bracket on a front side of which a base end of the front device is attached, a counterweight that is mounted to a rear part of the revolving frame and acts as a weight balance to the front device, an engine as a prime mover that is provided on the revolving frame to be located on the front side of the counterweight, an engine cover that is provided to be openable and closable in a front-rear direction with the position of the counterweight acting as a fulcrum to cover the engine from an upper side, a driver's seat that is provided on the engine cover, a floor plate that is located on the front side of the engine cover, is provided at the revolving frame in a state of having a gap in an upper-lower direction from the revolving frame, and forms a foothold for an operator who sits on the driver's seat, a lever stand that is located on a rear side over the front device bracket of the revolving frame, is provided in a state of being protruded upward from the floor plate, and includes an operation lever for operating the front device, an exterior cover that is located on a front side over the counterweight, and is provided to surround an outer periphery between the revolving frame and the floor plate from three surfaces of a left side surface, a right side surface and a front surface, and a protection member that is provided on a rear side of the upper revolving structure and protects the operator who sits on the driver's seat.

As the protection member, there is known a protection member that is configured by including a support column that is located on the rear side of the upper revolving structure and extends upward, and a canopy member that is mounted on an upper end of the support column and projects forward toward an upward side of the driver's seat (Patent Document 1). As the protection member, there is also known a protection member that is provided on the front side of the upper revolving structure (Patent Document 2).

### PRIOR ART DOCUMENT

### PATENT DOCUMENT

Patent Document 1: Japanese Utility Model Laid-Open No. Hei 5-89551 U
Patent Document 2: JP 2016 204889 A

### SUMMARY OF INVENTION

Incidentally, a small-sized hydraulic excavator may perform an indoor work, for example, enter the inside of a building and perform a demolition work, besides an outdoor excavating work. In a case of using the small-sized hydraulic excavator in the indoor work, the small-sized hydraulic excavator may enter a building from an ordinary entrance and exit where people go in and out, or may be put on an elevator. On the other hand, the protection member that covers an upward side over the operator needs to secure a living space (specified overhead space) for the operator who sits on the driver's seat. Consequently, the protection member has a height dimension that exceeds a height dimension of the entrance and exit of the building or the elevator.

In contrast to this, the small-sized hydraulic excavator according to Patent Document 1 is configured to tilt the protection member to the front side. Thereby, in a state where the protection member is tilted, a height dimension of the protection member can be made lower than the entrance and exit. However, when the protection member is tilted to the front side, the operator cannot sit on the driver's seat, and therefore, it takes time and effort to move the small-size hydraulic excavator.

Therefore, it is conceivable to remove the protection member from the upper revolving structure at the time of passing through the entrance and exit. In this case, it is necessary to remove or attach the protection member, manage the removed components so as not to lose the components, and transport the removed protection member, and there is a problem that the work efficiency deteriorates.

The present invention is made in view of the problems of the aforementioned conventional art, and an object of the present invention is to provide a small-sized hydraulic excavator that can reduce a height dimension of a protection member with a simple work without interfering with an operator who sits on a driver's seat.

The present invention is a small-sized hydraulic excavator comprising an automotive lower traveling structure, an upper revolving structure that is mounted on the lower traveling structure to be capable of revolving thereon, and a front device that is provided on a front side of the upper revolving structure to be capable of lifting and tilting thereto, the upper revolving structure including a revolving frame on a front side of which a base end of the front device is mounted, a driver's seat for an operator to sit on, a floor plate that is provided on the revolving frame to be located on a front side of the driver's seat and forms a foothold for the operator who sits on the driver's seat, and a protection member that is provided on the front side of the upper revolving structure and is configured to protect the operator who sits on the driver's seat, characterized in that the revolving frame is provided with a left front protruding part and a right front protruding part that are respectively disposed to be separated in a left-right direction on a front side of the bottom plate to interpose the front device therebetween and protrude forward, and the protection member includes a left base support column that is formed of a rod-shaped body extending in an upper-lower direction and has a lower end mounted on the left front protruding part of the revolving frame, a right base support column that is formed of a rod-shaped body extending in the upper-lower direction and has a lower end mounted on the right front protruding part of the revolving frame, a left intermediate support column that is mounted to an upper end of the left base support column via a left height adjustment mechanism to be capable of performing height adjustment in the upper-lower direction, a right intermediate support column that is mounted to an upper end of the right base support column via a right height adjustment mechanism to be capable of performing height adjustment in the upper-lower direction, and a canopy member that is mounted to an upper end of the left intermediate support column and an upper end of the right intermediate support column respectively via an angle adjustment mechanism and projects above the driver's seat in a state where adjustment of mounting angles to the left intermediate support column and the right intermediate support column is possible.

According to the present invention, the height dimension of the protection member can be reduced with the simple work without interfering with the operator who sits on the driver's seat.

### BRIEF DESCRIPTION OF DRAWINGS

Fig. 1 is a front view showing a small-sized hydraulic excavator that is applied to an embodiment of the present invention.
Fig. 2 is a perspective view of the small-sized hydraulic excavator in Fig. 1 as viewed from a diagonally front side.
Fig. 3 is a front view showing the small-sized hydraulic excavator in which a front device is removed, in a state where an engine cover is opened.
Fig. 4 is a perspective view enlarging and showing a revolving frame as a single unit.
Fig. 5 is a perspective view enlarging and showing the revolving frame and an exterior cover.
Fig. 6 is an exploded perspective view showing the revolving frame and a protection member in an exploded state.
Fig. 7 is an exploded perspective view showing the protection member in an exploded state.
Fig. 8 is a perspective view of an enlarged essential part showing a connection mechanism and an angle adjustment mechanism of the protection member in a state where a handle is removed.
Fig. 9 is an exploded perspective view exploding and showing the connection mechanism and the angle adjustment mechanism of the protection member in the state where the handle is removed.
Fig. 10 is a front view enlarging and showing the revolving frame and the protection member in Fig. 1.
Fig. 11 is a front view of a state in which a canopy member is folded by the angle adjustment mechanism as viewed from a position as similar to Fig. 10.
Fig. 12 is a front view of a state where an intermediate support column and the canopy member are moved upward and forward along a guide groove hole of the height adjustment mechanism as viewed from the position as similar to Fig. 10.
Fig. 13 is a front view of a state where the canopy member is folded by the angle adjustment mechanism, and the intermediate support column and the canopy member are moved downward by the height adjustment mechanism as viewed from the position as similar to Fig. 10.

### MODE FOR CARRYING OUT THE INVENTION

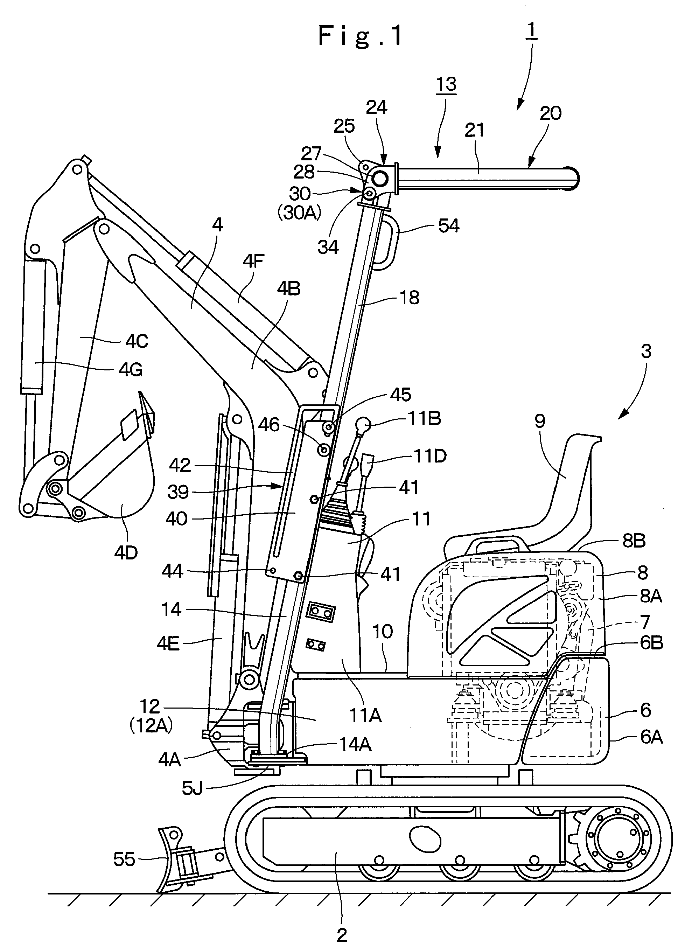

Hereinafter, an explanation will be in detail made of a small-sized hydraulic excavator provided with a swing type of a front device as a representative example of a small-sized hydraulic excavator according to an embodiment of the present invention with reference to Fig. 1 to Fig. 13.

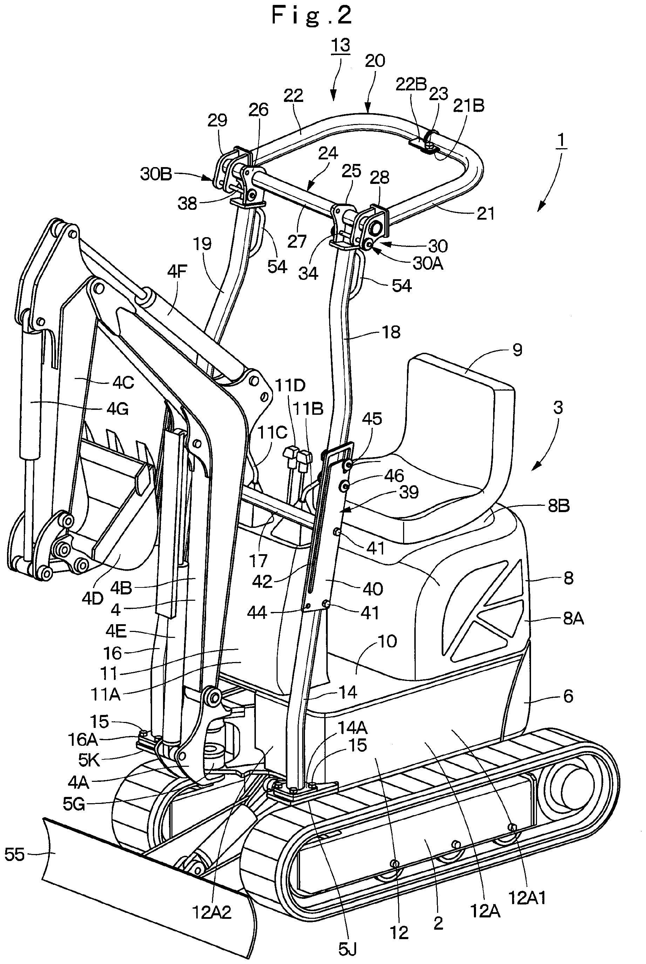

In Fig. 1 and Fig. 2, a small-sized hydraulic excavator 1 is configured by a crawler type automotive lower traveling structure 2, an upper revolving structure 3 mounted on the lower traveling structure 2 to be capable of revolving thereon, and a swing type front device 4 provided on a front side of the upper revolving structure 3 to be capable of lifting and tilting thereto. In this case, the small-sized hydraulic excavator 1 is configured as a mini excavator having a mechanical weight (total weight) of approximately one ton, for example, so as to be used in a demolition work inside a building, and an excavating work in a narrow place in a street area or the like.

The front device 4 is configured by including a swing post 4A that is mounted to a front device bracket 5G of a revolving frame 5 to be described later to be capable of swinging in a left-right direction, a boom 4B whose base end is mounted to the swing post 4A to be capable of lifting and tilting thereto, an arm 4C that is mounted to a tip end of the boom 4B to be capable of lifting and tilting thereto, a bucket 4D that is mounted to a tip end of the arm 4C to be rotatable thereto, a boom cylinder 4E that lifts and tilts the boom 4B, an arm cylinder 4F that lifts and tilts the arm 4C, and a bucket cylinder 4G that turns the bucket 4D. Further, a swing cylinder (not shown) that swings the swing post 4A in the left-right direction is provided between the swing post 4A and the revolving frame 5. By extending or contracting these cylinders 4E, 4F and 4G, the front device 4 can be operated.

The upper revolving structure 3 is configured by including the revolving frame 5, a counterweight 6, an engine 7, an engine cover 8, a driver's seat 9, a floor plate 10, a lever stand 11, an exterior cover 12, and a protection member 13.

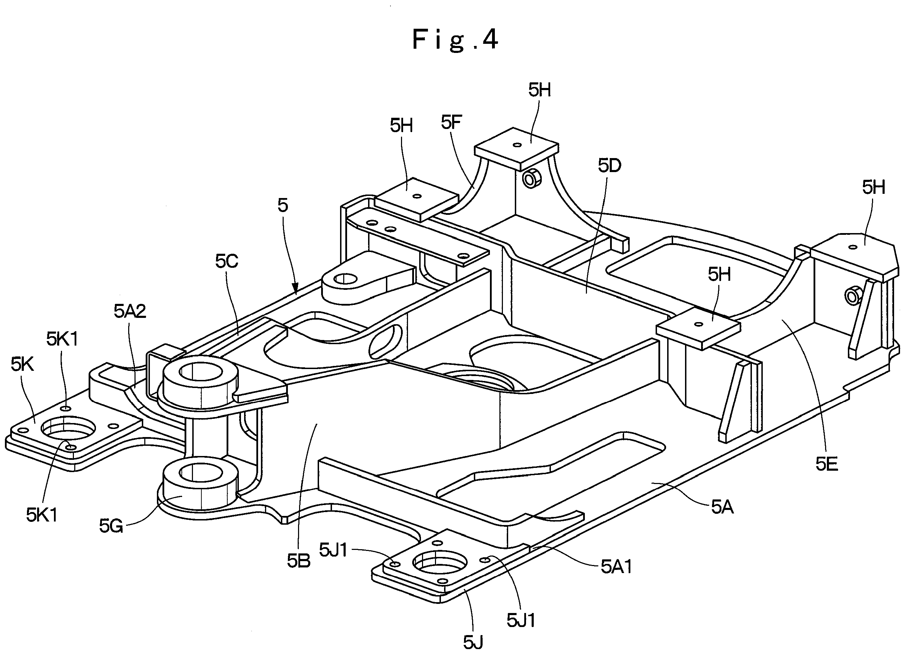

As shown in Fig. 4, the revolving frame 5 is configured by including a bottom plate 5A formed of a metallic thick plate having a rectangular shape extending in the front-rear direction, a left front vertical plate 5B and a right front vertical plate 5C that are provided vertically on the bottom plate 5A to extend in a V-letter shape so as to approach each other toward a front side, a lateral plate 5D that is located at rear parts of the respective front vertical plates 5B and 5C and is vertically provided to extend in the left-right direction, and a left rear vertical plate 5E and a right rear vertical plate 5F that extend rearward from the lateral plate 5D with a space in the left-right direction

A front device bracket 5G is provided on a front side of the revolving frame 5, that is, at front parts of the left front vertical plate 5B and the right front vertical plate 5C to protrude closer to a front side than a front end part of the bottom plate 5A. The front device bracket 5G supports the swing post 4A that configures a base end of the front device 4 to be capable of swinging in the left-right direction.

On the other hand, four engine brackets 5H are provided on a rear side of the revolving frame 5 in upper side positions of the lateral plate 5D, the left rear vertical plate 5E and the right rear vertical plate 5F to be separated in the front-rear direction and the left-right direction. The respective engine brackets 5H support the engine 7 via an anti-vibration mount.

Further, a left front protruding part 5J and a right front protruding part 5K are respectively disposed in a front side position of the revolving frame 5 in positions separated in the left-right direction with the front device 4 (that is, the front device bracket 5G) interposed therebetween. As described specifically, the left front protruding part 5J is located closer to a front side than a front surface 12A2 of a left cover part 12A of the exterior cover 12 to be described later, and is provided to protrude forward from a left front corner portion 5A1 of the bottom plate 5A. On the other hand, the right front protruding part 5K is located closer to a front side than a front surface 12B2 of a right cover part 12B of the exterior cover 12, and is provided to protrude forward from a right front corner part 5A2 of the bottom plate 5A. In this case, the left front protruding part 5J and the right front protruding part 5K each are formed as a rectangular plate body, and are disposed to be symmetrical in the left-right direction.

A flange part 14A of a left base support column 14 that configures the protection member 13 to be described later is mounted to the left front protruding part 5J. Further, four (only three are illustrated) screw holes 5J1 are provided in the left front protruding part 5J to correspond to bolt through holes 14B of the flange part 14A. Meanwhile, a flange part 16A of a right base support column 16 to be described later is mounted to the right front protruding part 5K. Further, four (only three are illustrated) screw holes 5K1 are provided in the right front protruding part 5K to correspond to bolt through holes 16B of the flange part 16A.

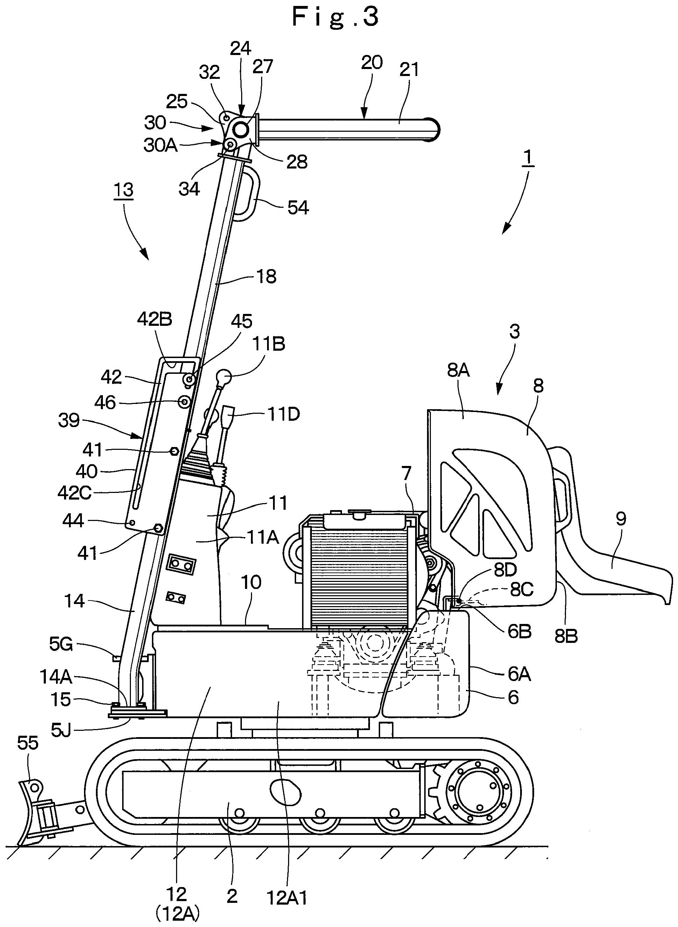

The counterweight 6 is mounted to a rear part of the revolving frame 5. The counterweight 6 acts as a weight balance to the front device 4, and is formed as a heavy object formed from an iron material. In this case, as shown in Fig. 1, an outer side surface 6A (a peripheral surface on a rear side) of the counterweight 6 is formed as a curved surface in which a center in the left-right direction is protruded rearward. As shown in Fig. 3, a hinge member 8C to be described later is mounted to an upper surface 6B of the counterweight 6. Thereby, the engine cover 8 to be described later can be supported to be openable and closable via the hinge member 8C.

The engine 7 configures a prime mover, is located on the front side of the counterweight 6 and is provided on the revolving frame 5 (see Fig. 1 and Fig. 3). The engine 7 is disposed in a transverse-mounted state extending in the left-right direction, and is mounted on each of the engine brackets 5H of the revolving frame 5 via the anti-vibration mount. The engine 7 drives a hydraulic pump (not illustrated) . It should be noted that as the prime mover, a hybrid type prime mover including an engine and an electric motor, and an electric motor can also be used.

The engine cover 8 covers the engine 7 as a prime mover, the hydraulic pump and the like from an upper side, and configures a prime mover cover. The engine cover 8 is formed as a cover in an inverted-bowl shape with an upper side of a peripheral surface part 8A in a rectangular cylindrical shape closed with a top surface part 8B. In the engine cover 8, a rear part of the peripheral surface part 8A is mounted to the upper surface 6B of the counterweight 6 via the hinge member 8C. Thereby, the engine cover 8 can open and close in the front-rear direction centering around a fulcrum 8D located on an upper side of the upper surface 6B of the counterweight 6.

The driver's seat 9 is provided on the top surface part 8B of the engine cover 8. The driver's seat 9 is for the operator who steers the small-sized hydraulic excavator 1 to sit on. The operator who sits on the driver's seat 9 is protected by the protection member 13 to be described later at the time of steering the small-sized hydraulic excavator 1.

The floor plate 10 forms a foothold of the operator who sits on the driver's seat 9, and is disposed on the front side of the engine cover 8. The floor plate 10 is provided at the revolving frame 5 in a state having a gap in an upper-lower direction between the floor plate 10 and the bottom plate 5A of the revolving frame 5.

The lever stand 11 is provided closer to a rear side than the front device bracket 5G of the revolving frame 5, that is, in a front side position of the floor plate 10 in a state of protruding upward from the floor plate 10. The lever stand 11 includes a stand main body 11A that is located in a center in the left-right direction of the floor plate 10 and is vertically provided on the floor plate 10, a left working operation lever 11B and a right working operation lever 11C that are provided at an upper part of the stand main body 11A to be separated in the left-right direction, and left and right traveling operation levers 11D that are located between the respective working operation levers 11B and 11C and is provided at an upper part of the stand main body 11A to be rotatable in the front-rear direction. The left and right working operation levers 11B and 11C can be tilted in the front-back direction and in the left-right direction. The left and right working operation levers 11B and 11C can control the front device 4 and the like by performing a tilting operation.

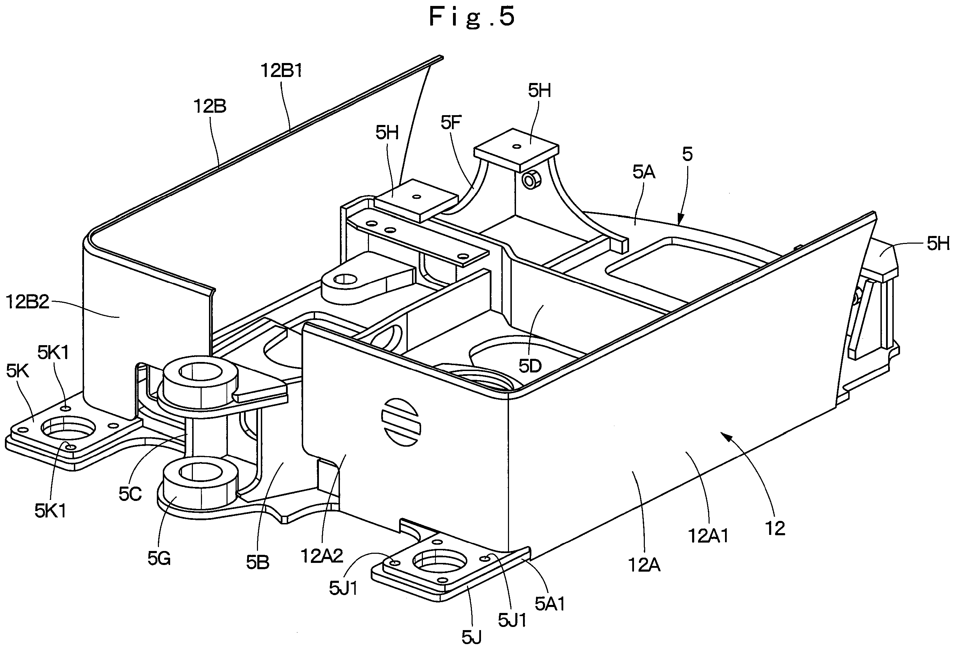

The exterior cover 12 is located closer to a front side than the counterweight 6, and is provided between the revolving frame 5 and the floor plate 10. As shown in Fig. 5, the exterior cover 12 is configured by a left cover part 12A and a right cover part 12B that are disposed to surround an outer periphery of the revolving frame 5. The left cover part 12A is formed as an L-letter shaped bent plate by a left side surface 12A1 that covers a left side of the revolving frame 5 and a front surface 12A2 that bends to a right side from a front end of the left side surface 12A1 and covers a front side of the revolving frame 5. Meanwhile, the right cover part 12B forms a symmetrical shape with the left cover part 12A in the left-right direction, and is formed as an L-letter shaped bent plate by a right side surface 12B1 and a front surface 12B2. Thereby, the exterior cover 12 can surround the revolving frame 5 and the floor plate 10 from three surfaces of a left side surface, a right side surface and a front surface.

Next, an explanation will be made of the configuration, the mounting structure and the angle adjustment work in regard to the protection member 13 that is a characteristic part of the present invention.

Descriptions will be made of the configuration and the mounting structure of the protection member 13. The protection member 13 is provided on a front side of the upper revolving structure 3, and protects the operator who sits on the driver's seat 9. The protection member 13 is formed by connecting rod-shaped bodies (pipe material) which are subjected to curving work for desired shapes, and is also called a rollover bar or a roll bar. The protection member 13 includes a left base support column 14, a right base support column 16, a left intermediate support column 18, a right intermediate support column 19, a canopy member 20, an angle adjustment mechanism 30, a left height adjustment mechanism 39 and a right height adjustment mechanism 47.

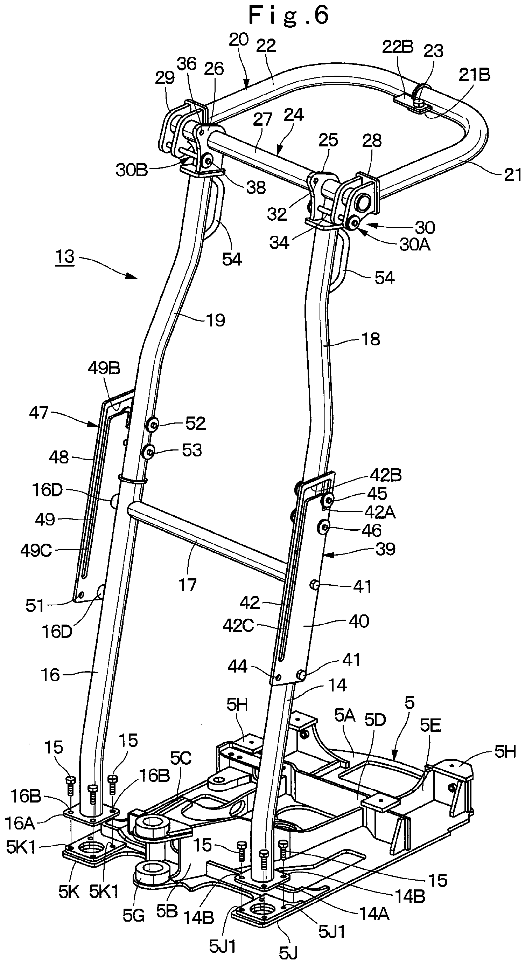

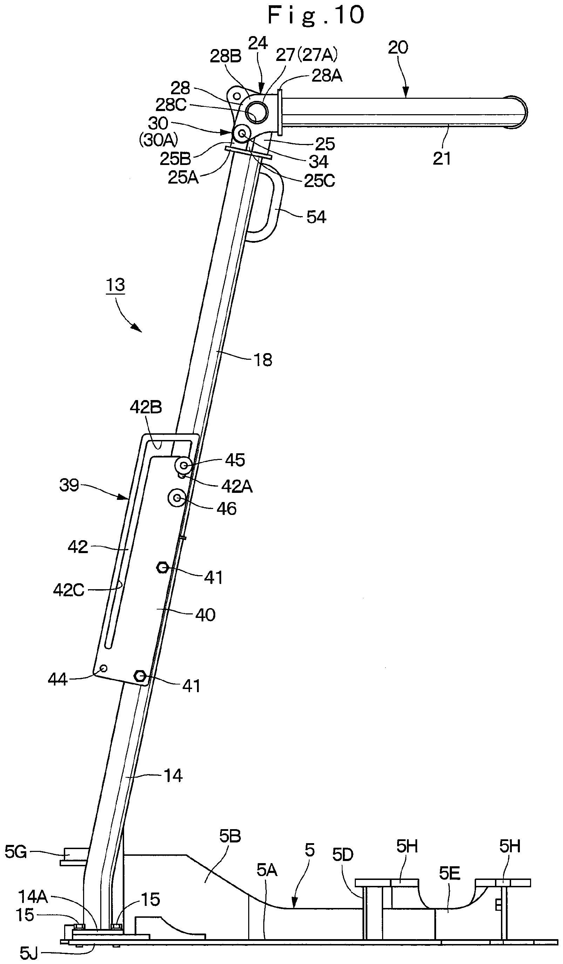

The left base support column 14 is formed as a rod-shaped body that extends in the upper-lower direction. As shown in Fig. 2 and Fig. 6, a lower end of the left base support column 14 is mounted to the left front protruding part 5J of the revolving frame 5. As shown in Fig. 10, the left base support column 14 is inclined rearward except for a lower part. The left base support column 14 is formed of a metallic round pipe material, for example, and a rectangular flange part 14A is provided at a lower end thereof. The flange part 14A abuts on the left front protruding part 5J of the revolving frame 5 from an upper side. Further, bolt through holes 14B are provided at four corners of the flange part 14A in positions corresponding to the respective screw holes 5J1 of the left front protruding part 5J.

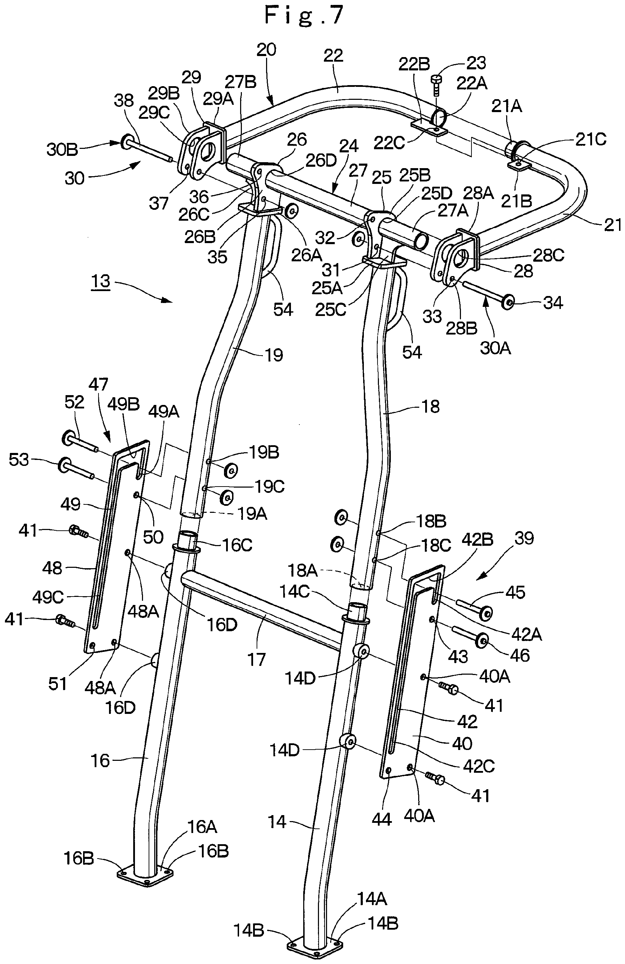

Meanwhile, as shown in Fig. 7, a connection cylindrical part 14C having a smaller diameter dimension than a diameter dimension of the left base support column 14 is provided at an upper end of the left base support column 14 to protrude upward. The connection cylindrical part 14C is inserted into an insertion opening 18A at a lower end of the left intermediate support column 18. Further, two screw seats 14D are provided on a left side which is an outer side in the left-right direction of the left base support column 14 to be spaced in the upper-lower direction and to be located closer to an upper side. Bolts 41 are screwed into the two screw seats 14D to mount a left board 40 of the left height adjustment mechanism 39 to be described later.

In a case of mounting the left base support column 14 on the revolving frame 5, the flange part 14A of the left base support column 14 is disposed to face the left front protruding part 5J of the revolving frame 5. In this state, bolts 15 as fastening members that are inserted through the respective bolt through holes 14B are screwed into the screw holes 5J1 of the left front protruding part 5J. Thereby, the left base support column 14 can be mounted to a left front side position of the revolving frame 5 in a state of extending upward.

The right base support column 16 is formed in a symmetrical shape to the left base support column 14 in the left-right direction. In other words, the right base support column 16 has a flange part 16A, bolt through holes 16B, a connection cylindrical part 16C and two screw seats 16D. In the right base support column 16, the flange part 16A is disposed to face the right front protruding part 5K of the revolving frame 5. In this state, the bolts 15 that are inserted through the respective bolt through holes 16B are screwed into the screw holes 5K1 of the right front protruding part 5K. Thereby, the right base support column 16 can be mounted to a right front side position of the revolving frame 5 to extend upward so as to be in parallel with the left base support column 14.

The lateral rod body 17 is formed of a rod-shaped body (including a pipe material) extending in the left-right direction. A left end of the lateral rod body 17 is mounted to an upper part of the left base support column 14, and a right end thereof is mounted to an upper part of the right base support column 16. Thereby, the lateral rod body 17 connects the upper part of the left base support column 14 and the upper part of the right base support column 16 with a predetermined space dimension.

The left intermediate support column 18 extends in the upper-lower direction while an upper side from an intermediate part in the upper-lower direction is bent inward in the left-right direction. The left intermediate support column 18 is formed by using a metallic round pipe material as similar to the left base support column 14. A lower end of the left intermediate support column 18 forms the insertion opening 18A into which the connection cylindrical part 14C of the left base support column 14 is inserted. Meanwhile, a left support column side joint 25 of a connection mechanism 24 to be described later is provided at an upper end of the left intermediate support column 18.

Further, an upper side pin through hole 18B and a lower side pin through hole 18C are provided on a lower side of the left intermediate support column 18 to penetrate therethrough in the left-right direction (in the diameter direction) at an interval in the upper and lower direction therebetween. In this case, in a mounting state where the connection cylindrical part 14C of the left base support column 14 is inserted in the insertion opening 18A, the upper side pin through hole 18B can communicate with an extension side vertical groove part 42A of a left guide groove hole 42 that is provided in the left board 40 of the left height adjustment mechanism 39. The lower side pin through hole 18C can communicate with an extension side fixing pin hole 43 or a contraction side fixing pin hole 44 of the left board 40.

The right intermediate support column 19 is formed in a symmetrical shape to the left intermediate support column 18 in the left-right direction. In other words, the right intermediate support column 19 has an insertion opening 19A, an upper side pin through hole 19B and a lower side pin through hole 19C.

The canopy member 20 is mounted to an upper end of the left intermediate support column 18 and an upper end of the right intermediate support column 19 via the connection mechanism 24 and an angle adjustment mechanism 30, which will be described later. The canopy member 20 projects above the driver's seat 9 in a state where adjustment of mounting angles to the respective intermediate support columns 18 and 19 is possible. The canopy member 20 is formed in a U-letter shape by using a metallic round pipe material. Further, the canopy member 20 is configured by a left canopy member 21 and a right canopy member 22. It should be noted that a roof member (not illustrated) that covers a part above the driver's seat 9 can be mounted to the canopy member 20.

The left canopy member 21 of the canopy member 20 is formed in a J-letter shape by bending a rear side of the metallic round pipe material extending in the front-rear direction to a right side. A rear side end part of the left canopy member 21 has an insertion cylindrical part 21A that protrudes to a right orientation with a smaller diameter dimension than a diameter dimension of the left canopy member 21. Further, a first bracket 21B formed of a plate body is provided in a position in the vicinity of the insertion cylindrical part 21A of the left canopy member 21 to protrude forward. A screw hole 21C is provided in the first bracket 21B.

The right canopy member 22 is formed in a symmetrical shape to the left canopy member 21 in the left-right direction. The right canopy member 22 is formed in a J-letter shape by bending a rear side of the metallic round pipe material extending in the front-rear direction to a left side. A rear side end part of the right canopy member 22 forms an insertion opening 22A that opens to a left orientation. Further, a second bracket 22B is provided in a position of the insertion opening 22A of the right canopy member 22, the second bracket 22B being formed of a plate body extending leftward over the insertion opening 22A while protruding forward. The second bracket 22B is formed to overlap with an upper side of the first bracket 21B in a state where the insertion cylindrical part 21A of the left canopy member 21 is inserted in the insertion opening 22A. Further, the second bracket 22B is provided with a bolt through hole 22C in a position corresponding to the screw hole 21C of the first bracket 21B.

The left canopy member 21 and the right canopy member 22 insert the insertion cylindrical part 21A of the left canopy member 21 in the insertion opening 22A of the right canopy member 22. In this state, a bolt 23 that is inserted through the bolt through hole 22C of the second bracket 22B of the right canopy member 22 is screwed into the screw hole 21C of the first bracket 21B of the left canopy member 21. Thereby, the left canopy member 21 and the right canopy member 22 are connected, thus making it possible to assemble the canopy member 20.

The connection mechanism 24 connects the left intermediate support column 18 and the right intermediate support column 19, and the canopy member 20 to be rotatable. The connection mechanism 24 is configured by the left support column side joint 25, a right support column side joint 26, a connection shaft 27, a left canopy side joint 28 and a right canopy side joint 29.

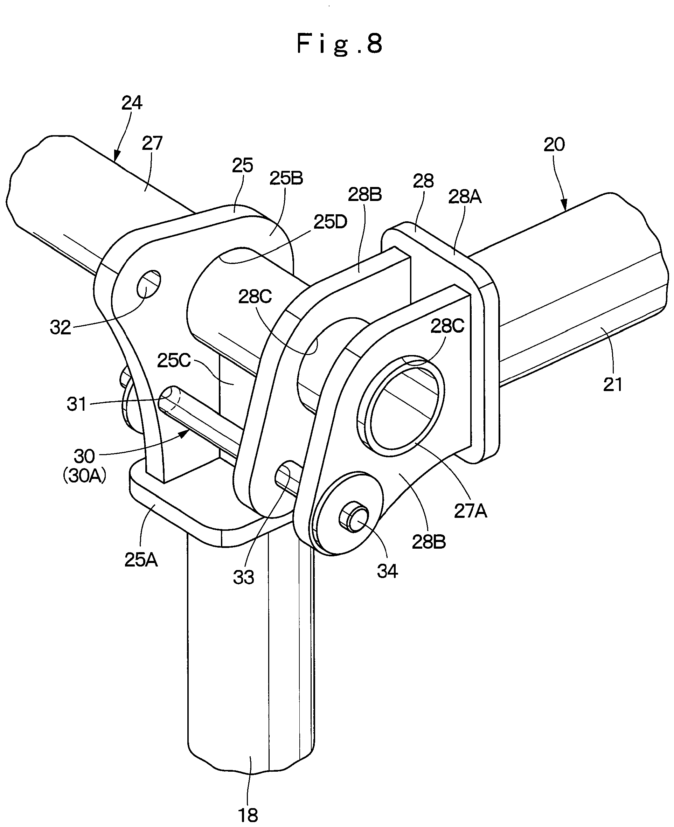

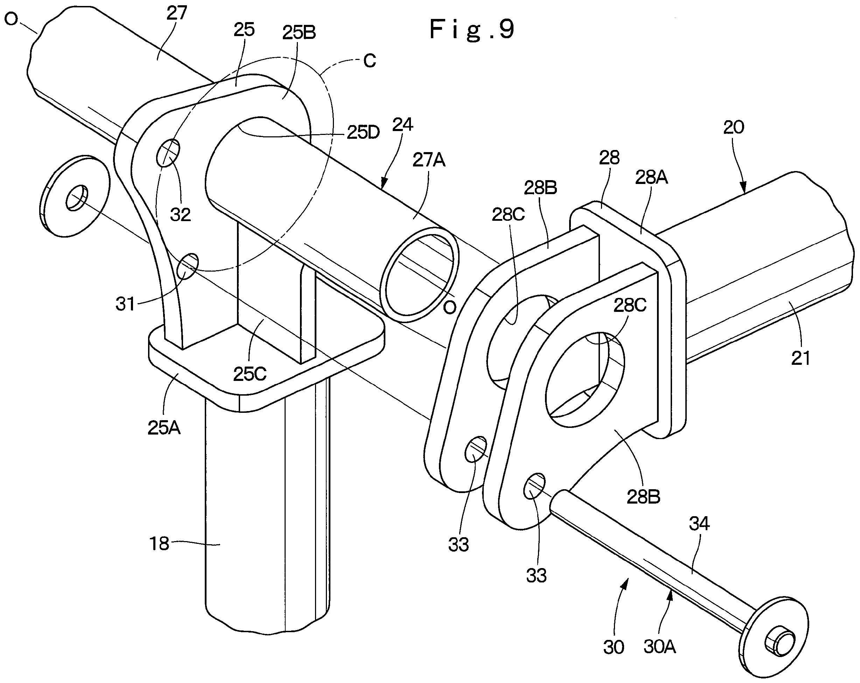

As shown in Fig. 8 and Fig. 9, the left support column side joint 25 is provided at the upper end of the left intermediate support column 18. The left support column side joint 25 is configured by a rectangular base plate 25A that is provided to close the upper end of the left intermediate support column 18, a shaft mounting plate 25B that is located inside of the base plate 25A in the left-right direction and is vertically provided to extend in the front-rear direction, and a reinforcing plate 25C that is vertically provided on the base plate 25A to extend outward in the left-right direction from the shaft mounting plate 25B. The shaft mounting plate 25B is provided with a shaft through hole 25D that is located directly above the reinforcing plate 25C and is provided to penetrate through the shaft mounting plate 25B in the left-right direction. Further, the shaft mounting plate 25B is provided with a left support column side first pin hole 31 and a left support column side second pin hole 32 that configure a left angle adjustment mechanism 30A to be described later.

The right support column side joint 26 is provided at the upper end of the right intermediate support column 19. The right support column side joint 26 is formed in a symmetrical shape to the left support column side joint 25 in the left-right direction. In other words, as shown in Fig. 7, the right support column side joint 26 includes a base plate 26A, a shaft mounting plate 26B, a reinforcing plate 26C and a shaft through hole 26D. Further, the shaft mounting plate 26B is provided with a right support column side first pin hole 35 and a right support column side second pin hole 36 that configure a right angle adjustment mechanism 30B to be described later.

The connection shaft 27 extends in the left-right direction to connect the left support column side joint 25 and the right support column side joint 26. The connection shaft 27 is formed as one shaft body that connects the left intermediate support column 18 and the canopy member 20, and the right intermediated support column 19 and the canopy member 20. The connection shaft 27 is formed as a pipe member that extends linearly in the left-right direction.

In the connection shaft 27, the left end part 27A-side penetrates through the shaft through hole 25D of the left support column side joint 25, and a tip end thereof extends leftward over the reinforcing plate 25C. Meanwhile, the right end part 27B-side of the connection shaft 27 penetrates through the shaft through hole 26D of the right support column side joint 26, and a tip end thereof extends rightward over the reinforcing plate 26C. The connection shaft 27 is fixedly attached to the respective shaft mounting plates 25B and 26B and the reinforcing plates 25C and 26C by using welding means.

The left canopy side joint 28 is provided at a front end of the left canopy member 21 that configures the canopy member 20. The left canopy side joint 28 is provided such that the left end part 27A of the connection shaft 27 is inserted therein to be rotatable. The left canopy side joint 28 is configured by a rectangular base plate 28A that is provided to close a front end of the left canopy member 21, and two shaft mounting plates 28B that extend forward from the base plate 28A in a state having a space in the left-right direction. The respective shaft mounting plates 28B extend downward such that tip end sides thereof extending forward curve. Each of the shaft mounting plates 28B is provided with a shaft through hole 28C formed to penetrate through the shaft mounting plate 28B in the left-right direction. Further, left canopy side pin holes 33 of the left angle adjustment mechanism 30A to be described later are provided in tip end sides of the respective shaft mounting plates 28B.

The right canopy side joint 29 is provided at a front end of the right canopy member 22 that configures the canopy member 20. The right canopy side joint 29 is provided such that the right end part 27B of the connection shaft 27 is inserted therein to be rotatable. The right canopy side joint 29 is configured by a base plate 29A and two shaft mounting plates 29B as similar to the left canopy side joint 28. Further, each of the shaft mounting plates 29B is provided with a shaft through hole 29C formed to penetrate through the shaft mounting plate 29B in the left-right direction. Further, right canopy side pin holes 37 of a right angle adjustment mechanism 30B to be described later are provided at tip end sides of the respective shaft mounting plates 29B.

The connection mechanism 24 integrally connects the upper part of the left intermediate support column 18 and the upper part of the right intermediate support column 19 by the left support column side joint 25, the right support column side joint 26 and the connection shaft 27. On top of this, the left end part 27A of the connection shaft 27 is inserted through the shaft through holes 28C of the left canopy side joint 28, and the right end part 27B of the connection shaft 27 is inserted through the shaft through holes 29C of the right canopy side joint 29. Thereby, the connection mechanism 24 can connect the canopy member 20 to the left intermediate support column 18 and the right intermediate support column 19 to be rotatable (turnable) centering around an axis line O-O (see Fig. 9) of the connection shaft 27.

Next, an explanation will be made of the details of the configuration and the angle adjustment work of the angle adjustment mechanism 30 that is a characteristic part of the present invention.

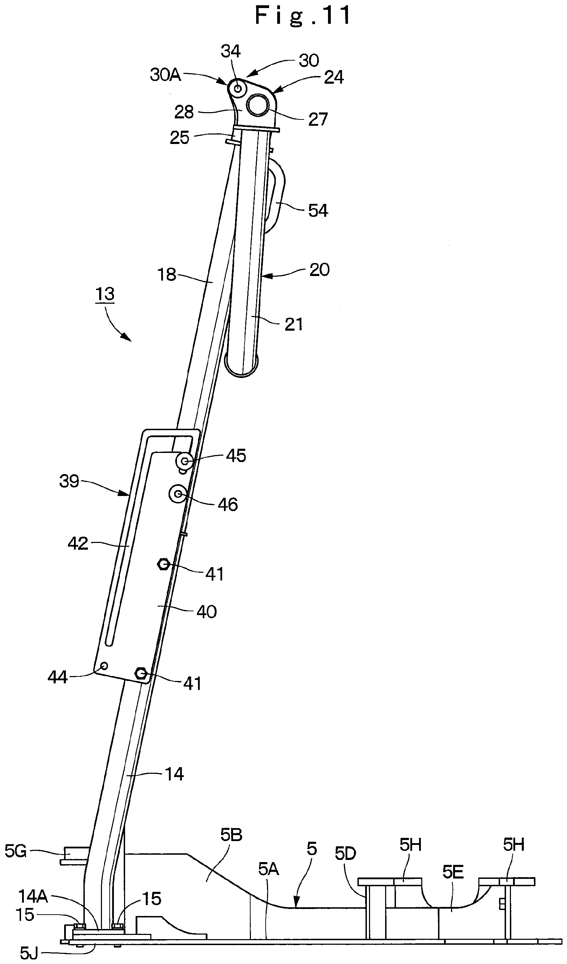

The angle adjustment mechanism 30 performs adjustment of mounting angles of the canopy member 20 to the left intermediate support column 18 and the right intermediate support column 19. The angle adjustment mechanism 30 according to the present embodiment is capable of adjusting the mounting angle of the canopy member 20 to the left intermediate support column 18 and the right intermediate support column 19 in a plurality of steps, for example, two steps in the upper-lower direction. Specifically, the angle adjustment mechanism 30 can adjust the mounting angle of the canopy member 20 to two angle positions composed of a normal position which is horizontal (a position shown in Fig. 10) and a storage position (a position shown in Fig. 11) where a rear side is turned downward from the normal position.

As shown in Fig. 7 to Fig. 9, the angle adjustment mechanism 30 is configured by the left angle adjustment mechanism 30A which is rotatably provided between the left intermediate support column 18 and the canopy member 20 via the connection shaft 27, and the right angle adjustment mechanism 30B which is rotatably provided between the right intermediate support column 19 and the canopy member 20 via the connection shaft 27. The left angle adjustment mechanism 30A is configured by the left support column side first pin hole 31, the left support column side second pin hole 32, the left canopy side pin hole 33 and a left engagement pin 34, which will be described later.

The left support column side first pin hole 31 configures a left support column side pin hole, and is formed in the shaft mounting plate 25B of the left support column side joint 25 to penetrate therethrough in the left-right direction. The left support column side first pin hole 31 is disposed on the circumference of circle centering around the axis line O-O of the connection shaft 27, that is, on a virtual circle C shown by an alternate long and short dash line in Fig. 9. The left support column side first pin hole 31 is for insertion of the left engagement pin 34 when the mounting angle of the canopy member 20 is fixed to the normal position to be horizontal. In this case, the left support column side first pin hole 31 is disposed in a position which is on the same axis line as the left canopy side pin hole 33 which is provided in the left canopy side joint 28 when the canopy member 20 is disposed horizontally. Specifically, the left support column side first pin hole 31 is disposed in a position in the vicinity of a front end edge in an intermediate part of the shaft mounting plate 25B in the upper-lower direction.

The left support column side second pin hole 32 configures a left support column side pin hole, and is formed in the shaft mounting plate 25B of the left support column side joint 25 to be located closer to an upper side (a tip end of the shaft mounting plate 25B) than the left support column side first pin hole 31. The left support column side second pin hole 32 is disposed on the virtual circle C as similar to the left support column side first pin hole 31. The left support column side second pin hole 32 is for insertion of the left engagement pin 34 at the time of fixing the mounting angle of the canopy member 20 to the storage position in which the rear side is folded to the respective intermediate support column 18 and 19-sides by turning the rear side to the downward side much more than to the normal position. Here, the left support column side second pin hole 32 is disposed in a position to be on the same axis line as the left canopy side pine hole 33 at the left canopy side joint 28-side when the canopy member 20 is folded to the respective intermediate support columns 18 and 19-sides.

The left canopy side pin holes 33 are respectively formed in the respective shaft mounting plates 28B of the left canopy side joint 28 to penetrate therethrough in the left-right direction. The respective left canopy side pin holes 33 are disposed on the aforementioned virtual circle C at tip end sides of the respective shaft mounting plates 28B. In this case the respective left canopy side pin holes 33 are for the after-mentioned left engagement pin 34 to be inserted. At this time, the left canopy side pin holes 33 restrain inclination of the left engagement pin 34 by being respectively formed in the shaft mounting plates 28B that are separated in the left-right direction. Thereby, the left engagement pin 34 can be held in a state of being in parallel with the axis line O-O of the connection shaft 27.

The left engagement pin 34 is inserted through either one of the left support column side first pin hole 31 and the left support column side second pin hole 32, and the left canopy side pin holes 33. The left engagement pin 34 has a retaining function by a retaining pin, a retaining ring or the like.

The right angle adjustment mechanism 30B is configured by the right support column side first pin hole 35, the right support column side second pin hole 36, the right canopy side pin hole 37 and the right engagement pin 38, which will be described later, as similar to the left angle adjustment mechanism 30A.

The right support column side first pin hole 35 is formed in the shaft mounting plate 26B of the right support column side joint 26. The right support column side first pin hole 35 is provided in a position as similar to the left support column side first pin hole 31 and has a function as similar thereto, and therefore, an explanation thereof will be omitted. Further, the right support column side second pin hole 36 is also provided in a position as similar to the left support column side second pin hole 32 and has a function as similar thereto, and therefore, an explanation thereof will be omitted. The right support column side first pin hole 35 and the right support column side second pin hole 36 configure the right support column side pin hole.

The right canopy side pin holes 37 are formed to penetrate through the respective shaft mounting plates 29B of the right canopy side joint 29 respectively in the left-right direction. The respective right canopy side pin holes 37 are provided in positions as similar to the respective left canopy side pin holes 33 and have functions as similar thereto, and an explanation thereof will be omitted.

The right engagement pin 38 is inserted through either one pin hole of the right support column side first pin hole 35 and the right support column side second pin hole 36, and the right canopy side pin hole 37. The right engagement pin 38 has a retaining function by a retaining pin, a retaining ring or the like, as similar to the left engagement pin 34.

Next, descriptions will be made of an example of a work procedure in a case of adjusting angles of the canopy member 20 to the left intermediate support column 18 and the right intermediate support column 19 by the angle adjustment mechanism 30 (the left angle adjustment mechanism 30A and the right angle adjustment mechanism 30B).

First, in a case of performing an excavating work for the ground, the canopy member 20 is held in a horizontal state. In this state, the left angle adjustment mechanism 30A disposes the left support column side first pin hole 31 and the left canopy side pin holes 33 on the same axis line. In this state, the left engagement pin 34 is inserted and fitted through the left support column side first pin hole 31 and the left canopy side pin holes 33. Likewise, the right engagement pin 38 is inserted and fitted through the right support column side first pin hole 35 and the right canopy side pin holes 37. Thereby, as shown in Fig. 10, the canopy member 20 can be fixed to the normal position to be horizontal.

Meanwhile, as a first step for reducing a height dimension of the protection member 13, it is necessary to fold the canopy member 20. Therefore, the respective engagement pins 34 and 38 are extracted, and the rear side of the canopy member 20 is turned downward to dispose the left support column side second pin hole 32 and the left canopy side pin holes 33 on the same axis line. In this state, the left engagement pin 34 is inserted and fitted through the left support column side second pin hole 32 and the left canopy side pin holes 33. Likewise, the right engagement pin 38 is inserted and fitted through the right support column side second pin hole 36 and the right canopy side pin holes 37. Thereby, as shown in Fig. 11, the canopy member 20 can be fixed to the storage position where the canopy member 20 is folded to the respective intermediate support columns 18 and 19-sides.

Next, an explanation will be in detail made of the configuration and the adjustment work of the height for each of the left height adjustment mechanism 39 and the right height adjustment mechanism 47 that are the characteristic parts of the present invention.

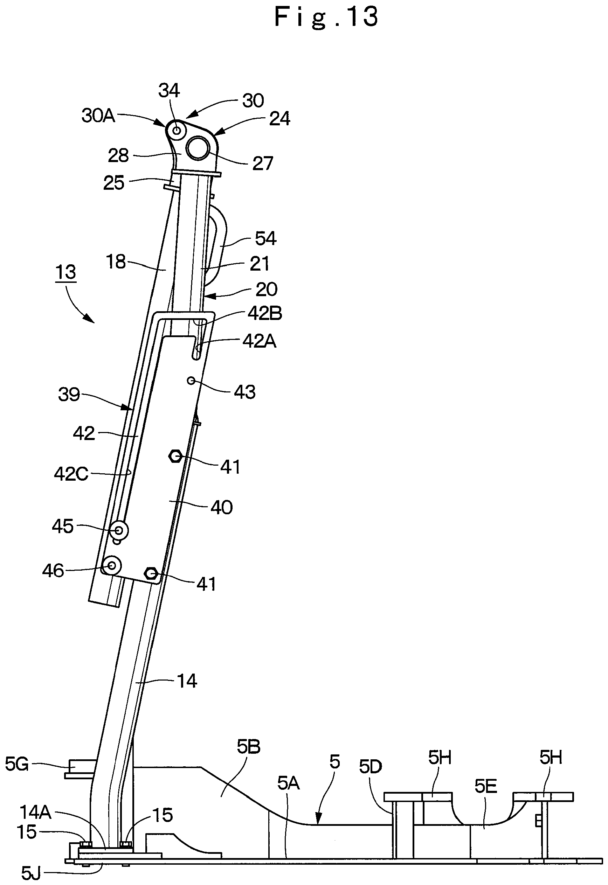

The left height adjustment mechanism 39 is provided between the left base support column 14 and the left intermediate support column 18. The left height adjustment mechanism 39 adjusts a height in the upper-lower direction of the left intermediate support column 18 to the left base support column 14. The left height adjustment mechanism 39 can adjust a fixed position of the left intermediate support column 18 to the left base support column 14 in a plurality of steps in the upper-lower direction, for example, two steps as up and down. In other words, the left height adjustment mechanism 39 moves the respective intermediate support columns 18 and 19 and the canopy member 20 to a normal position (extension position) shown in Fig. 10 and Fig. 11 and a contraction position shown in Fig. 13, and can fix the respective intermediate support columns 18 and 19 and the canopy member 20 in the respective positions in corporation with the right height adjustment mechanism 47.

The left height adjustment mechanism 39 is configured by including the left board 40, the left guide groove hole 42 and the left engagement pin 45 for moving, which will be described later.

The left board 40 is located on a left side (an outer side) in the left-right direction of the left base support column 14 and is mounted to an upper side position of the left base support column 14. The left board 40 is formed of a plate body that extends in the upper-lower direction along the left base support column 14, and an upper end thereof protrudes upward more than the left base support column 14. Thereby, an upper part of the left board 40 overlaps with a lower part of the left intermediate support column 18 in the normal position of the respective intermediate support columns 18 and 19 and the canopy member 20.

The left board 40 is formed of a rectangular metal plate that extends in the upper-lower direction with a width dimension of approximately twice as large as a diameter dimension of each of the left base support column 14 and the left intermediate support column 18, for example. As shown in Fig. 7, the left board 40 is provided with bolt through holes 40A in an intermediate part and a lower part in the upper-lower direction to be located closer to a rear side to correspond to the respective screw seats 14D of the left base support column 14. The left board 40 is fixedly mounted to the left base support column 14 by screwing the bolts 41 that are inserted through the respective bolt through holes 40A to the respective screw seats 14D.

The left guide groove hole 42 is provided in the left board 40. The left guide groove hole 42 extends in an inverted J-letter shape toward a lower side of a front part from an upper side of a rear part of the left board 40. The left guide groove hole 42 is configured by the extension side vertical groove part 42A that is located at the upper side of the rear part of the left board 40 as an upper side of the bolt through hole 40A and extends to be in a short length in the upper-lower direction, a lateral groove part 42B that extends forward from an upper part of the extension side vertical groove part 42A, and a contraction side vertical groove part 42C that is located on a front side of the left board 40 and extends to be in a long length along the left base support column 14 downward from a front part of the lateral groove part 42B.

The extension side vertical groove part 42A has a lower part position, which is separated downward from the lateral groove part 42B, disposed in a position corresponding to the upper side pin through hole 18B of the left intermediate support column 18. A dimension of a length of the extension side vertical groove part 42A in the upper-lower direction is a larger dimension than a protrusion dimension of the connection cylindrical part 14C of the left base support column 14. Thereby, the left intermediate support column 18 can separate the insertion opening 18A from the connection cylindrical part 14C even in a state of being engaged with the left guide groove hole 42 by the left engagement pin 45 for moving to be described later.

The contraction side vertical groove part 42C determines a downward moving dimension of the left intermediate support column 18. A length dimension of the contraction side vertical groove part 42C is set, for example, to such a dimension that the canopy member 20 which is folded downward can move to a lower position within a range where the canopy member 20 does not interfere with the lever stand 11 and the like around the canopy member 20.

The extension side fixing pin hole 43 is provided in the left board 40 to be located on a lower side of the extension side vertical groove part 42A. The extension side fixing pin hole 43 communicates with the lower side pin through hole 18C of the left intermediate support column 18 in a state where the connection cylindrical part 14C of the left base support column 14 is inserted in the insertion opening 18A of the left intermediate support column 18. In this state, a left engagement pin 46 for fixing is inserted and fitted in the extension side fixing pin hole 43.

The contraction side fixing pin hole 44 is provided in the left board 40 to be located on a lower side of the contraction side vertical groove part 42C. The contraction side fixing pin hole 44 communicates with the lower side pin through hole 18C of the left intermediate support column 18 in a state (state shown in Fig. 13) where the left intermediate support column 18 is moved downward to overlap with the front side of the left base support column 14. In this state, the left engagement pin 46 for fixing is inserted and fitted in the contraction side fixing pin hole 44.

The left engagement pin 45 for moving configures a left engagement member. The left engagement pin 45 for moving is provided in the left intermediate support column 18 in a state of being engaged with the left guide groove hole 42, and guides the left intermediate support column 18 in the upper-lower direction along the left guide groove hole 42. The left engagement pin 45 for moving is removably inserted and fitted in the left guide groove hole 42 and the upper side pin through hole 18B of the left intermediate support column 18. It should be noted that the left engagement pin 45 for moving has a retaining function by a retaining pin, a retaining ring or the like as similar to the aforementioned left engagement pin 34.

The left engagement pin 46 for fixing is provided in the left intermediate support column 18. The left engagement pin 46 for fixing fixes the left intermediate support column 18 to the normal position (extension position) shown in Fig. 10, or the contraction position shown in Fig. 13. Specifically, in the normal position (extension position) where the connection cylindrical part 14C of the left base support column 14 is inserted in the insertion opening 18A of the left intermediate support column 18, the left engagement pin 46 for fixing is inserted through the extension side fixing pin hole 43 and the lower side pin through hole 18C of the left intermediate support column 18. Thereby, the left engagement pin 46 for fixing can integrally fix the left intermediate support column 18 to the upper part of the left base support column 14.

Meanwhile, in the contraction position where the left intermediate support column 18 is moved downward to overlap with the front side of the left base support column 14, the left engagement pin 46 for fixing is caused to communicate with the contraction side fixing pin hole 44 and the lower side pin through hole 18C of the left intermediate support column 18. Thereby, the left engagement pin 46 for fixing can fix the left intermediate support column 18 to the contraction position. It should be noted that the left engagement pin 46 for fixing has a retaining function by a retaining pin, a retaining ring or the like, as similar to the aforementioned left engagement pin 34.

The right height adjustment mechanism 47 is provided between the right base support column 16 and the right intermediate support column 19. The right height adjustment mechanism 47 adjusts a height in the upper-lower direction of the right intermediate support column 19 to the right base support column 16 in two steps. The right height adjustment mechanism 47 is formed only in a symmetrical shape to the left height adjustment mechanism 39 in the left-right direction, and has the configuration as similar thereto, and therefore, an explanation of the configuration will be simplified. The right height adjustment mechanism 47 is configured by including a right board 48, a right guide groove hole 49 and a right engagement pin 52 for moving, which will be described later.

The right board 48 is fixedly mounted to an upper side position of the right base support column 16 by bolts 41 that are inserted through two bolt through holes 48A. The right guide groove hole 49 is provided in the right board 48. The right guide groove hole 49 has an extension side vertical groove part 49A, a lateral groove part 49B and a contraction side vertical groove part 49C. Further, an extension side fixing pin hole 50 and a contraction side fixing pin hole 51 are provided in the right board 48.

The right engagement pin 52 for moving configures a right engagement member and is removably inserted and fitted in the right guide groove hole 49 and the upper side pin through hole 19B of the right intermediate support column 19. A right engagement pin 53 for fixing is caused to communicate with the extension side fixing pin hole 50 and the lower side pin through hole 19C of the right intermediate support column 19, or the contraction side fixing pin hole 51 and the lower side pin through hole 19C of the right intermediate support column 19.

Next, an explanation will be made of an example of a work procedure in a case of adjusting height positions of the respective intermediate support columns 18 and 19 by the left height adjustment mechanism 39 and the right height adjustment mechanism 47 to the two steps of the normal position (extension position) and the contraction position. In this case, similar procedures will be applied to the left height adjustment mechanism 39 and the right height adjustment mechanism 47, and therefore, the work procedure of the left height adjustment mechanism 39 will be described, and the work procedure of the right height adjustment mechanism 47 will be omitted.

As shown in Fig. 10, at the time of the normal work, the left engagement pin 46 for fixing is inserted and fitted through the extension side fixing pin hole 43 and the lower side pin through hole 18C of the left intermediate support column 18. In this state, the left intermediate support column 18 can be fixedly supported on the left base support column 14 by the left height adjustment mechanism 39.

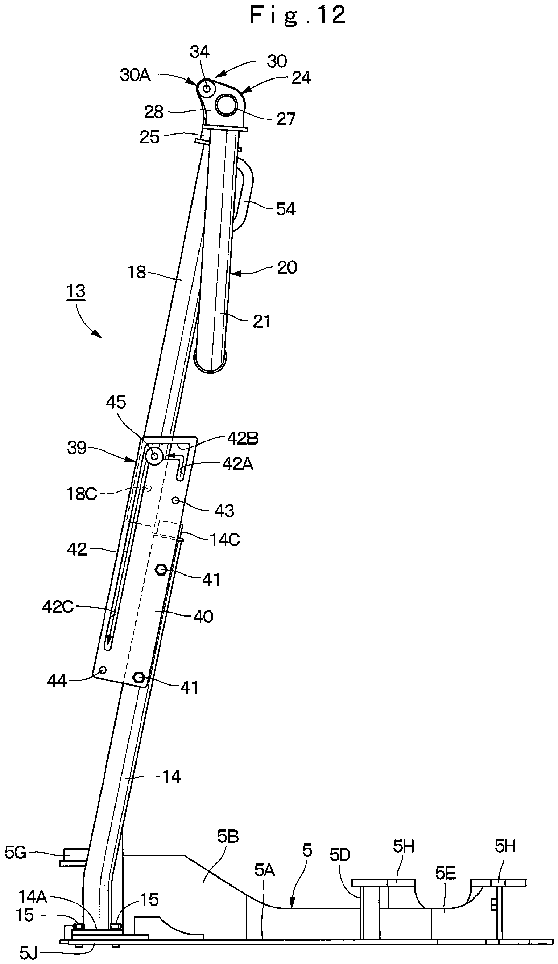

Meanwhile, in a case of moving the left intermediate support column 18 downward, the left engagement pin 46 for fixing that fixes the left intermediate support column 18 onto the left base support column 14 is extracted. In this state, the left intermediate support column 18 is moved upward while causing the left engagement pin 45 for moving to move along the extension side vertical groove part 42A of the left guide groove hole 42. Thereby, the insertion opening 18A of the left intermediate support column 18 can be separated from the connection cylindrical part 14C of the left base support column 14. As shown in Fig. 12, when the left intermediate support column 18 is separated from the left base support column 14, the left intermediate support column 18 is moved forward while causing the left engagement pin 45 for moving to move along the lateral groove part 42B of the left guide groove hole 42.

When the left engagement pin 45 for moving reaches the contraction side vertical groove part 42C of the left guide groove hole 42, the left intermediate support column 18 is moved downward while causing the left engagement pin 45 for moving to move along the contraction side vertical groove part 42C. As shown in Fig. 13, when the left engagement pin 45 for moving reaches the lower end side of the contraction side vertical groove part 42C, the left engagement pin 46 for fixing is inserted and fitted through the contraction side fixing pin hole 44 and the lower side pin through hole 18C of the left intermediate support column 18. Thereby, the left height adjustment mechanism 39 can fix the left intermediate support column 18 to the contraction position (lower side position).

Handles 54 are provided at an upper end side of the left intermediate support column 18 and an upper end side of the right intermediate support column 19, respectively. The handles 54 are provided on a lower side of the angle adjustment mechanism 30, that is, on rear sides of upper parts of the respective intermediate support columns 18 and 19. Thereby, the operator can stably get on and off the driver's seat 9 by grasping the handles 54 when getting on and off the driver's seat 9.

It should be noted that earth removal equipment 55 is provided on a front side of the lower traveling structure 2 to be rotatable in the upper-lower direction. The earth removal equipment 55 levels the ground and performs an earth removal work.

The small-sized hydraulic excavator 1 according to the present embodiment has the configuration as described above, and an operation thereof will be described next.

The operator sits on the driver's seat 9 and operates the traveling operation lever 11D of the lever stand 11, and thereby, making it possible to cause the lower traveling structure 2 to travel. Meanwhile, the operator operates the left and right working operation levers 11B and 11C, and thereby, can perform a revolving operation of the upper revolving structure 3, an excavating work of earth and sand by the front device 4, and the like.

Further, in a case of performing maintenance of the engine 7, the front side of the engine cover 8 is held and lifted up. Thereby, as shown in Fig. 3, the engine cover 8 can be opened upward or rearward centering around the fulcrum 8D to be in the position of the counterweight 6. In a state where the engine cover 8 is opened, the engine 7 can be exposed to perform the maintenance of the engine 7.

The small-sized hydraulic excavator 1 may perform an indoor work, for example, enters the inside of a building and performs a demolition work, besides an outdoor excavating work. In a case of performing the indoor work, the small-sized hydraulic excavator 1 may be put indoors through a normal entrance and exit where people enter and exit, or may be placed on an elevator. Meanwhile, the small-sized hydraulic excavator 1 is provided with the protection member 13 for protecting the operator who sits on the driver's seat 9. The protection member 13 has a sufficient height dimension for securing a living space (specified overhead space) of the operator. Consequently, the height dimension of the protection member 13 may exceed the height dimension of the entrance and exit of a building or an elevator.

Therefore, an explanation will be made of a work procedure in a case of reducing the height dimension by deforming the protection member 13 to enter a building or an elevator with reference to Fig. 10 to Fig. 13, as an example.

First, as a first step, the canopy member 20 is folded to prevent the canopy member 20 from making contact with the operator when the protection member 13 is lowered. As for the folding work of the canopy member 20, the canopy member 20 is rotated downward toward the respective intermediate support columns 18 and 19 by the angle adjustment mechanism 30 (the left angle adjustment mechanism 30A and the right angle adjustment mechanism 30B).

In other words, in the folding work of the canopy member 20, the respective engagement pins 34 and 38 are extracted, and the rear side of the canopy member 20 is turned downward. On top of this, the left support column side second pin hole 32 and the left canopy side pin hole 33 are disposed on the same axis line, and the left engagement pin 34 is inserted and fitted therein. Likewise, the right engagement pin 38 is inserted and fitted in the right support column side second pin hole 36 and the right canopy side pin holes 37. Thereby, as shown in Fig. 11, the canopy member 20 can be fixed in a storage state where the canopy member 20 is folded to the respective intermediate support columns 18 and 19-sides.

Next, after the canopy member 20 is folded to the respective intermediate support columns 18 and 19-sides, the respective intermediate support columns 18 and 19 and the canopy member 20 are moved downward by the left and right height adjustment mechanisms 39 and 47. In this case, as shown in Fig. 12, the left engagement pin 45 for moving is moved along the left guide groove hole 42 of the left height adjustment mechanism 39, and the right engagement pin 52 for moving is moved along the right guide groove hole 49 of the right height adjustment mechanism 47. At this time, the respective intermediate support columns 18 and 19 are separated from the respective base support columns 14 and 16. In this state, the respective intermediate support columns 18 and 19 are moved downward together with the folded canopy member 20 to overlap with the front sides of the respective base support columns 14 and 16.

As shown in Fig. 13, after the respective intermediate support columns 18 and 19 and the canopy member 20 are disposed in lower positions, the left engagement pin 46 for fixing is inserted and fitted through the contraction side fixing pin hole 44 and the lower side pin through hole 18C of the left intermediate support column 18, and the right engagement pin 53 for fixing is inserted and fitted through the contraction side fixing pin hole 51 and the lower side pin through hole 19C of the right intermediate support column 19. Thereby, the respective height adjustment mechanisms 39 and 47 can change the height dimension of the protection member 13 to be low.

Subsequently, after the height dimension of the protection member 13 is changed to be low, the operator who sits on the driver's seat 9 operates the respective traveling operation levers 11D. Thereby, the small-sized hydraulic excavator 1 can enter a building or an elevator through an entrance and exit. Meanwhile, by performing a work in a reverse procedure to the aforementioned work procedure, the protection member 13 can be returned to the normal position shown in Fig. 10.

Thus, according to the present embodiment, the revolving frame 5 is provided with the left front protruding part 5J and the right front protruding part 5K that are disposed to be separated in the left-right direction on the front side of the bottom plate 5A to interpose the front device 4 therebetween, and protrude forward. The protection member 13 is configured to include the left base support column 14, the right base support column 16, the left intermediate support column 18, the right intermediate support column 19 and the canopy member 20.

In this case, the left base support column 14 is formed of a rod-shaped body extending in the upper-lower direction and has the lower end mounted on the left front protruding part 5J of the revolving frame 5. The right base support column 16 is formed of a rod-shaped body extending in the upper-lower direction and has the lower end mounted on the right front protruding part 5K of the revolving frame 5. The left intermediate support column 18 is mounted to the upper end of the left base support column 14 via the left height adjustment mechanism 39 to be capable of performing the height adjustment in the upper-lower direction. The right intermediate support column 19 is mounted to the upper end of the right base support column 16 via the right height adjustment mechanism 47 to be capable of performing the height adjustment in the upper-lower direction. Further, the canopy member 20 is mounted to the upper end of the left intermediate support column 18 and the upper end of the right intermediate support column 19 via the angle adjustment mechanisms 30 (30A, 30B) respectively, and projects above the driver's seat 9 in a state where the adjustment of the mounting angles to the left intermediate support column 18 and the right intermediate support column 19 is possible.

Accordingly, the protection member 13 can fold the canopy member 20 by the angle adjustment mechanism 30, and can move the respective intermediate support columns 18 and 19 and the folded canopy member 20 to the lower positions by the left and right height adjustment mechanisms 39 and 47. Thereby, the small-sized hydraulic excavator 1 can lower the protection member 13 to pass through the entrance and exit.

At this time, the lowered protection member 13 does not interfere with the operator who sits on the driver's seat 9. Thereby, the operator operates the respective traveling operation levers 11D, and thereby can enter the inside of a building or an elevator through the entrance and exit. In addition, it is not necessary to remove the protection member 13 to pass through the entrance and exit.

As a result, the lowered protection member 13 does not interfere with the operator who sits on the driver's seat 9. On top of this, the height dimension of the protection member 13 can be lowered with the simple work of folding the canopy member 20 and moving the respective intermediate support columns 18 and 19 forward to enhance the work efficiency.

The left height adjustment mechanism 39 is configured by the left board 40 which is mounted along the left base support column 14 and has the upper end protruded upward more than the left base support column 14, the left guide groove hole 42 that is provided in the left board 40 and extends in the upper-lower direction along the left base support column 14, and the left engagement pin 45 for moving that is provided in the left intermediate support column 18 in a state of being engaged with the left guide groove hole 42 and guides the left intermediate support column 18 in the upper-lower direction along the left guide groove hole 42. Further, the right height adjustment mechanism 47 is configured by the right board 48 that is mounted along the right base support column 16 and has the upper end protruded upward more than the right base support column 16, the right guide groove hole 49 that is provided in the right board 48 and extends in the upper-lower direction along the right base support column 16, and the right engagement pin 52 for moving that is provided in the right intermediate support column 19 in a state of being engaged with the right guide groove hole 49 and guides the right intermediate support column 19 in the upper-lower direction along the right guide groove hole 49.

Accordingly, by only moving the left engagement pin 45 for moving and the right engagement pin 52 for moving along the respective guide groove holes 42 and 49, the respective intermediate support columns 18 and 19 and the canopy member 20 can be moved to the lower positions by the simple work.

The protection member 13 includes the left support column side joint 25 provided at the upper end of the left intermediate support column 18, the right support column side joint 26 provided at the upper end of the right intermediate support column 19, the connection shaft 27 that connects the left support column side joint 25 and the right support column side joint 26 and extends in the left-right direction, the left canopy side joint 28 that is provided at the left rear end of the canopy member 20 and in which the left end part 27A of the connection shaft 27 is rotatably inserted, and the right canopy side joint 29 that is provided at the right rear end of the canopy member 20 and in which the right end part 27B of the connection shaft 27 is rotatably inserted.

On top of that, the angle adjustment mechanism 30 has the left support column side first pin hole 31, the left support column side second pin hole 32, the right support column side first pin hole 35, the right support column side second pin hole 36, the left canopy side pin holes 33, the right canopy side pin holes 37, the left engagement pin 34, and the right engagement pin 38. The left support column side first pin hole 31 and the left support column side second pin hole 32 are formed in the left support column side joint 25, the right support column side first pin hole 35 and the right support column side second pin hole 36 are formed in the right support column side joint 26, and these pin holes 31, 32, 35 and 36 are disposed on the circumference of circle (on the virtual circle C) centering around the connection shaft 27. The left canopy side pin holes 33 and the right canopy side pin holes 37 are formed in the left canopy side joint 28 and the right canopy side joint 29 respectively, and are disposed on the aforementioned circumference of circle. The left engagement pin 34 sets the mounting angle of the left canopy side joint 28 to the connection shaft 27 by being inserted through the left support column side first pin hole 31 or the left support column side second pin hole 32 and the left canopy side pin holes 33. The right engagement pin 38 sets the mounting angle of the right canopy side joint 29 to the connection shaft 27 by being inserted through the right support column side first pin hole 35 or the right support column side second pin hole 36, and the right canopy side pin holes 37.

In addition, the two of the left support column side first pin hole 31 and the left support column side second pin hole 32, and the one left canopy side pin hole 33 are provided as the left support column side pin holes. Likewise, the two of the right support column side first pin hole 35 and the right support column side second pin hole 36, and the one right canopy side pin hole 37 are provided as the right support column side pin holes.

Thereby, the insertion position of the left engagement pin 34 is defined as the left support column side first pin hole 31 or the left support column side second pin hole 32. Further, the insertion position of the right engagement pin 38 is defined as the right support column side first pin hole 35 or the right support column side second pin hole 36. Thereby, the canopy member 20 can be adjusted to the two angle positions composed of the normal position to be horizontal and the storage position in which the rear side is folded by being turned downward.

Further, the handles 54 are provided at the upper end sides of the left intermediate support column 18 and the right intermediate support column 19 respectively to be located on the lower side of the angle adjustment mechanism 30. Accordingly, the operator can grasp the handles 54 when getting on and off the driver's seat 9.

It should be noted that in the embodiment, the two of the left support column side first pin hole 31 and the left support column side second pin hole 32 are provided in the left support column side joint 25 along the virtual circle C. Likewise, the two of the right support column side first pin hole 35 and the right support column side second pin hole 36 are provided in the right support column side joint 26. Further, the one left canopy side pin hole 33 is provided in the left canopy side joint 28 to be located on the virtual circle C. Likewise, a case in which the one right canopy side pin hole 37 is provided in the right canopy side joint 29 is shown as an example. However, the present invention is not limited thereto, and may have the configuration in which one or three or more left support column side pin holes are provided in the left support column side joint 25, and one or three or more right support column side pin holes are provided in the right support column side joint 26. Further, two or more left canopy side pin holes may be configured to be provided in the left canopy side joint 28, and two or more right canopy side pin holes may be configured to be provided in the right canopy side joint 29.

The embodiment is explained by taking the small-sized hydraulic excavator 1 provided with the swing type front device 4 as an example. However, the present invention is not limited thereto, but the present invention may be applied to a small-sized hydraulic excavator provided with an offset type (a parallel moving type) front device.

### DESCRIPTION OF REFERENCE NUMERALS

- 1:: Small-sized hydraulic excavator
- 2:: Lower traveling structure
- 3:: Upper revolving structure
- 4:: Front device
- 5:: Revolving frame
- 5J:: Left front protruding part
- 5K:: Right front protruding part
- 9:: Driver's seat
- 10:: Floor plate
- 13:: Protection member
- 14:: Left base support column
- 14A, 16A:: Flange part
- 15:: Bolt (Fastening member)
- 16:: Right base support column
- 18:: Left intermediate support column
- 19:: Right intermediate support column
- 20:: Canopy member
- 21:: Left canopy member
- 22:: Right canopy member
- 25:: Left support column side joint
- 26:: Right support column side joint
- 27:: Connection shaft
- 27A:: Left end part
- 27B:: Right end part
- 28:: Left canopy side joint
- 29:: Right canopy side joint
- 30:: Angle adjustment mechanism
- 30A:: Left angle adjustment mechanism
- 30B:: Right angle adjustment mechanism
- 31:: Left support column side first pin hole (Left support column
- side: pin hole)
- 32:: Left support column side second pin hole (Left support column side pin hole)
- 33:: Left canopy side pin hole
- 34:: Left engagement pin
- 35:: Right support column side first pin hole (Right support column side pin hole)
- 36:: Right support column side second pin hole (Right support column side pin hole)
- 37:: Right canopy side pin hole
- 38:: Right engagement pin
- 39:: Left height adjustment mechanism
- 40:: Left board
- 42:: Left guide groove hole
- 45:: Left engagement pin for moving (Left engagement member)
- 47:: Right height adjustment mechanism
- 48:: Right board
- 49:: Right guide groove hole
- 52:: Right engagement pin for moving (Right engagement member)
- 54:: Handle
- C:: Virtual circle (Circumference of circle)

## Claims

1. A small-sized hydraulic excavator comprising:
an automotive lower traveling structure (2);
an upper revolving structure (3) that is mounted on the lower traveling structure (2) to be capable of revolving thereon; and
a front device (4) that is provided on a front side of the upper revolving structure (3) to be capable of lifting and tilting thereto,
the upper revolving structure (3) including;
a revolving frame (5) on a front side of which a base end of the front device (4) is mounted,
a driver's seat (9) for an operator to sit on,
a floor plate (10) that is provided on the revolving frame (5) to be located on a front side of the driver's seat (9) and forms a foothold for the operator who sits on the driver's seat (9), and
a protection member (13) that is provided on the front side of the upper revolving structure (3) and is configured to protect the operator who sits on the driver's seat (9), **characterized in that**;
the revolving frame (5) is provided with a left front protruding part (5J) and a right front protruding part (5K) that are respectively disposed to be separated in a left-right direction on a front side of the bottom plate (5A) to interpose the front device (4) therebetween and protrude forward, and
the protection member (13) includes;
a left base support column (14) that is formed of a rod-shaped body extending in an upper-lower direction and has a lower end mounted on the left front protruding part (5J) of the revolving frame (5),
a right base support column (16) that is formed of a rod-shaped body extending in the upper-lower direction and has a lower end mounted on the right front protruding part (5K) of the revolving frame (5),
a left intermediate support column (18) that is mounted to an upper end of the left base support column (14) via a left height adjustment mechanism (39) to be capable of performing height adjustment in the upper-lower direction,
a right intermediate support column (19) that is mounted to an upper end of the right base support column (16) via a right height adjustment mechanism (47) to be capable of performing height adjustment in the upper-lower direction, and
a canopy member (20) that is mounted to an upper end of the left intermediate support column (18) and an upper end of the right intermediate support column (19) respectively via an angle adjustment mechanism (30) and projects above the driver's seat (9) in a state where adjustment of mounting angles to the left intermediate support column (18) and the right intermediate support column (19) is possible.

2. The small-sized hydraulic excavator according to claim 1, wherein
the left height adjustment mechanism (39) is capable of adjusting a fixed position of the left intermediate support column (18) to the left base support column (14) in a plurality of steps in the upper-lower direction,
the right height adjustment mechanism (47) is capable of adjusting a fixed position of the right intermediate support column (19) to the right base support column (16) in a plurality of steps in the upper-lower direction, and
the angle adjustment mechanism (30) is capable of adjusting a mounting angle of the canopy member (20) to the left intermediate support column (18) and the right intermediate support column (19) in a plurality of steps in the upper-lower direction.

3. The small-sized hydraulic excavator according to claim 1, wherein
the angle adjustment mechanism (30) includes:
a left angle adjustment mechanism (30A) that is provided between the left intermediate support column (18) and the canopy member (20) via a connection shaft (27) to be capable of performing angle adjustment; and
a right angle adjustment mechanism (30B) that is provided between the right intermediate support column (19) and the canopy member (20) via the connection shaft (27) to be capable of performing angle adjustment.

4. The small-sized hydraulic excavator according to claim 3, wherein
the connection shaft (27) is formed of one shaft body configured to connect the left intermediate support column (18) and the canopy member (20), and the right intermediate support column (19) and the canopy member (20), and
the canopy member (20) includes two members composed of a left canopy member (21) that is located at the left angle adjustment mechanism side and is supported by the connection shaft (27), and a right canopy member (22) that is located at the right angle adjustment mechanism side and is supported by the connection shaft (27).

5. The small-sized hydraulic excavator according to claim 1, wherein
the left height adjustment mechanism (39) includes:
a left board (40) that is mounted along the left base support column (14) and an upper end of which protrudes upward more than the left base support column (14);
a left guide groove hole (42) that is provided in the left board (40) and extends in the upper-lower direction along the left base support column (14); and
a left engagement member (45) that is provided at the left intermediate support column (18) in a state of being engaged with the left guide groove hole (42) and is configured to guide the left intermediate support column (18) in the upper-lower direction along the left guide groove hole (42), and
the right height adjustment mechanism (47) includes:
a right board (48) that is mounted along the right base support column (16) and an upper end of which protrudes upward more than the right base support column (16);
a right guide groove hole (49) that is provided in the right board (48) and extends in the upper-lower direction along the right base support column (16); and
a right engagement member (52) that is provided at the right intermediate support column (19) in a state of being engaged with the right guide groove hole (49) and is configured to guide the right intermediate support column (19) in the upper-lower direction along the right guide groove hole (49).

6. The small-sized hydraulic excavator according to claim 1, wherein
the protection member (13) includes:
a left support column side joint (25) that is provided at the upper end of the left intermediate support column (18);
a right support column side joint (26) that is provided at the upper end of the right intermediate support column (19);
a connection shaft (27) that connects the left support column side joint (25) and the right support column side joint (26) and extends in the left-right direction;
a left canopy side joint (28) that is provided at a left front end of the canopy member (20) and in which a left end part (27A) of the connection shaft (27) is rotatably inserted; and
a right canopy side joint (29) that is provided at a right front end of the canopy member (20) and in which a right end part (27B) of the connection shaft (27) is rotatably inserted, and
the angle adjustment mechanism (30) includes:
a left support column side pin hole (31, 32) that is formed in the left support column side joint (25) and is disposed on a circumference (c) of circle centering around the connection shaft (27);
a right support column side pin hole (35, 36) that is formed in the right support column side joint (26) and is disposed on the circumference (c) of circle;
a left canopy side pin hole (33) that is formed in the left canopy side joint (28) and is disposed on the circumference (c) of circle;
a right canopy side pin hole (37) that is formed in the right canopy side joint (29) and is disposed on the circumference (c) of circle;
a left engagement pin (34) that sets a mounting angle of the left canopy side joint (28) to the connection shaft (27) by being inserted through the left support column side pin hole (31, 32) and the left canopy side pin hole (33); and
a right engagement pin (38) that sets a mounting angle of the right canopy side joint (29) to the connection shaft (27) by being inserted through the right support column side pin hole (35, 36) and the right canopy side pin hole (37), and
pin holes on either one side of the left and right support column side (31, 32, 35, 36) and the left and right canopy side (33, 37) are disposed on the circumference (c) of circle at plural positions, and pin holes on the other side are disposed on the circumference (c) of circle at one or more positions.

7. The small-sized hydraulic excavator according to claim 1, wherein
handles (54) are provided at an upper end side of the left intermediate support column (18) and at an upper end side of the right intermediate support column (19) respectively, the handles (54) being located on a lower side of the angle adjustment mechanism (30), and being grasped by an operator when getting on and off the driver's seat (9).

8. The small-sized hydraulic excavator according to claim 1, wherein
flange parts (14A, 16A) are provided at the lower end of the left base support column (14) and at the lower end of the right base support column (16) respectively, and
the flange part (14A) of the left base support column (14) is mounted to the left front protruding part (5J) of the revolving frame (5) by using a fastening member (15) and the flange part (16A) of the right base support column (16) is mounted to the right front protruding part (5K) of the revolving frame (5) by using a fastening member (15).

## Patentansprüche

1. Kleiner Hydraulikbagger, umfassend:
einen unteren Kraftfahrzeug-Fahraufbau (2);
einen oberen Drehaufbau (3), der an dem unteren Fahraufbau (2) montiert ist, um sich auf diesem drehen zu können; und
eine vordere Vorrichtung (4), die an einer Vorderseite des oberen Drehaufbaus (3) vorgesehen ist, um diesen anheben und kippen zu können,
wobei der obere Drehaufbau (3) umfasst;
einen Drehrahmen (5), an dessen Vorderseite ein Basisende der vorderen Vorrichtung (4) angebracht ist,
einen Fahrersitz (9), auf dem ein Bediener Platz nehmen kann,
eine Bodenplatte (10), die an dem Drehrahmen (5) vorgesehen ist, um an einer Vorderseite des Fahrersitzes (9) angeordnet zu werden, und die eine Fußstütze für den Bediener bildet, der auf dem Fahrersitz (9) sitzt, und ein Schutzelement (13), das an der Vorderseite des oberen Drehaufbaus (3) vorgesehen ist und so konfiguriert ist, dass es den auf dem Fahrersitz (9) sitzenden Bediener schützt, **dadurch gekennzeichnet, dass**;
der Drehrahmen (5) mit einem linken vorderen vorragenden Teil (5J) und
einem rechten vorderen vorragenden Teil (5K) versehen ist, die jeweils so angeordnet sind, dass sie in einer Links-Rechts-Richtung an einer Vorderseite der Bodenplatte (5A) getrennt sind, um die vordere Vorrichtung (4) dazwischen anzuordnen, und nach vorne vorstehen, und
wobei das Schutzelement (13) umfasst;
eine linke Basisstützsäule (14), die aus einem stabförmigen Körper gebildet ist, der sich in einer Richtung von oben nach unten erstreckt und ein unteres Ende aufweist, das an dem linken vorderen vorragenden Teil (5J) des Drehrahmens (5) angebracht ist),
eine rechte Basisstützsäule (16), die aus einem stabförmigen Körper gebildet ist, der sich in der Richtung von oben nach unten erstreckt und ein unteres Ende aufweist, das an dem rechten vorderen vorragenden Teil (5K) des Drehrahmens (5) angebracht ist),
eine linke Zwischenstützsäule (18), die an einem oberen Ende der linken Basisstützsäule (14) über einen linken Höheneinstellmechanismus (39) angebracht ist, um eine Höheneinstellung in der Richtung von oben nach unten durchführen zu können,
eine rechte Zwischenstützsäule (19), die an einem oberen Ende der rechten Basisstützsäule (16) über einen rechten Höheneinstellmechanismus (47) angebracht ist, um eine Höheneinstellung in der Richtung von oben nach unten durchführen zu können, und
ein Überdachungselement (20), das an einem oberen Ende der linken Zwischenstützsäule (18) bzw. einem oberen Ende der rechten Zwischenstützsäule (19) über einen Winkeleinstellmechanismus (30) befestigt ist und
in einem Zustand, in dem eine Einstellung der Befestigungswinkel an der linken Zwischenstützsäule (18) und der rechten Zwischenstützsäule (19) möglich ist, über den Fahrersitz (9) hinausragt.

2. Kleiner Hydraulikbagger nach Anspruch 1, wobei
der linke Höheneinstellmechanismus (39) in der Lage ist, eine feste Position der linken Zwischenstützsäule (18) zu der linken Basisstützsäule (14) in einer Vielzahl von Schritten in der Richtung von oben nach unten einzustellen,
der rechte Höheneinstellmechanismus (47) in der Lage ist, eine feste Position der rechten Zwischenstützsäule (19) zu der rechten Basisstützsäule (16) in einer Vielzahl von Schritten in der Richtung von oben nach unten einzustellen, und
der Winkeleinstellmechanismus (30) in der Lage ist, einen Befestigungswinkel des Überdachungselements (20) an der linken Zwischenstützsäule (18) und der rechten Zwischenstützsäule (19) in einer Vielzahl von Schritten in der Richtung von oben nach unten einzustellen.

3. Kleiner Hydraulikbagger nach Anspruch 1, wobei der Winkelverstellmechanismus (30) umfasst:
einen linken Winkeleinstellmechanismus (30A), der zwischen der linken Zwischenstützsäule (18) und dem Überdachungselement (20) über eine Verbindungswelle (27) vorgesehen ist, um eine Winkeleinstellung durchführen zu können; und
einen rechten Winkeleinstellmechanismus (30B), der zwischen der rechten Zwischenstützsäule (19) und dem Überdachungselement (20) über die Verbindungswelle (27) vorgesehen ist, um eine Winkeleinstellung durchführen zu können.

4. Kleiner Hydraulikbagger nach Anspruch 3, wobei
die Verbindungswelle (27) aus einem Wellenkörper besteht, der so konfiguriert ist, dass er die linke Zwischenstützsäule (18) und das Überdachungselement (20) sowie die rechte Zwischenstützsäule (19) und das Überdachungselement (20) verbindet, und
das Überdachungselement (20) zwei Elemente umfasst, die aus einem linken Überdachungselement (21), das sich auf der Seite des linken Winkeleinstellmechanismus befindet und von der Verbindungswelle (27) getragen wird, und einem rechten Überdachungselement (22) bestehen, das sich auf der Seite des rechten Winkeleinstellmechanismus befindet und von der Verbindungswelle (27) getragen wird.

5. Kleiner Hydraulikbagger nach Anspruch 1, wobei der linke Höheneinstellmechanismus (39) umfasst:
eine linke Platte (40), die entlang der linken Basisstützsäule (14) montiert ist und deren oberes Ende weiter nach oben als die linke Basisstützsäule (14) herausragt;
ein linkes Führungsnutloch (42), das in der linken Platte (40) vorgesehen ist und sich in der Richtung von oben nach unten entlang der linken Basisstützsäule (14) erstreckt; und
ein linkes Eingriffselement (45), das an der linken Zwischenstützsäule (18) in einem Zustand vorgesehen ist, in dem es mit dem linken Führungsnutloch (42) in Eingriff steht, und das so konfiguriert ist, dass es die linke Zwischenstützsäule (18) in der Richtung von oben nach unten entlang des linken Führungsnutlochs (42) führt, und
der rechte Höheneinstellmechanismus (47) umfasst:
eine rechte Platte (48), die entlang der rechten Basisstützsäule (16) angebracht ist und deren oberes Ende weiter nach oben als die rechte Basisstützsäule (16) herausragt;
ein rechtes Führungsnutloch (49), das in der rechten Platte (48) vorgesehen ist und sich in der Richtung von oben nach unten entlang der rechten Basisstützsäule (16) erstreckt; und
ein rechtes Eingriffselement (52), das an der rechten Zwischenstützsäule (19) in einem Zustand vorgesehen ist, in dem es mit dem rechten Führungsnutloch (49) in Eingriff steht, und das so konfiguriert ist, dass es die rechte Zwischenstützsäule (19) in der Richtung von oben nach unten entlang des rechten Führungsnutlochs (49) führt.

6. Kleiner Hydraulikbagger nach Anspruch 1, wobei das Schutzelement (13) umfasst:
ein linkes stützsäulenseitiges Gelenk (25), das am oberen Ende der linken Zwischenstützsäule (18) vorgesehen ist;
ein rechtes stützsäulenseitiges Gelenk (26), das am oberen Ende der rechten Zwischenstützsäule (19) vorgesehen ist;
eine Verbindungswelle (27), die das linke stützsäulenseitige Gelenk (25) und das rechte stützsäulenseitige Gelenk (26) miteinander verbindet und sich in der Links-Rechts-Richtung erstreckt;
ein linkes überdachungsseitiges Gelenk (28), das an einem linken vorderen Ende des Überdachungselements (20) vorgesehen ist und in die ein linkes Endteil (27A) der Verbindungswelle (27) drehbar eingesetzt ist; und ein rechtes überdachungsseitiges Gelenk (29), das an einem rechten vorderen Ende des Überdachungselements (20) vorgesehen ist und in das ein rechtes Endteil (27B) der Verbindungswelle (27) drehbar eingesetzt ist, und
der Winkelverstellmechanismus (30) umfasst:
ein linkes stützsäulenseitiges Stiftloch (31, 32), das in dem linken stützsäulenseitigen Gelenk (25) ausgebildet ist und auf einem Umfang (c) eines Kreises angeordnet ist, der um die Verbindungswelle (27) zentriert ist;
ein rechtes stützsäulenseitiges Stiftloch (35, 36), das in dem rechten stützsäulenseitigen Gelenk (26) ausgebildet ist und auf dem Umfang (c) des Kreises angeordnet ist;
ein linkes überdachungsseitiges Stiftloch (33), das in dem linken überdachungsseitigen Gelenk (28) ausgebildet ist und auf dem Umfang (c) des Kreises angeordnet ist;
ein rechtes überdachungsseitiges Stiftloch (37), das in dem rechten überdachungsseitigen Gelenk (29) ausgebildet ist und auf dem Umfang (c) des Kreises angeordnet ist;
einen linken Eingriffsstift (34), der einen Befestigungswinkel des linken überdachungsseitigen Gelenks (28) an der Verbindungswelle (27) einstellt,
indem er durch das linke stützensäulenseitige Stiftloch (31, 32) und das linke überdachungsseitige Stiftloch (33) eingeführt ist; und
einen rechten Eingriffsstift (38), der einen Befestigungswinkel des rechten überdachungsseitigen Gelenks (29) an dem Verbindungswelle (27) einstellt, indem er durch das rechte stützensäulenseitige Stiftloch (35, 36) und das rechte überdachungsseitige Stiftloch (37) eingeführt ist, und
Stiftlöcher auf jeder Seite der linken und rechten Stützsäulenseite (31, 32, 35, 36) und der linken und rechten Überdachungsseite (33, 37) am Umfang (c) des Kreises an mehreren Positionen angeordnet sind, und Stiftlöcher auf der anderen Seite am Umfang (c) des Kreises an einer oder mehreren Positionen angeordnet sind.

7. Kleiner Hydraulikbagger nach Anspruch 1, wobei Griffe (54) an einer oberen Endseite der linken Zwischenstützsäule (18) bzw. an einer oberen Endseite der rechten Zwischenstützsäule (19) vorgesehen sind, wobei die Griffe (54) an einer Unterseite des Winkelverstellmechanismus (30) angeordnet sind und von einem Bediener, wenn er auf den Fahrersitz (9) aufsteigt bzw. von diesem absteigt, ergriffen werden.

8. Kleiner Hydraulikbagger nach Anspruch 1, wobei
Flanschteile (14A, 16A) am unteren Ende der linken Basisstützsäule (14) bzw. am unteren Ende der rechten Basisstützsäule (16) vorgesehen sind, und
das Flanschteil (14A) der linken Basisstützsäule (14) an dem linken vorderen vorragenden Teil (5J) des Drehrahmens (5) unter Verwendung eines Befestigungselements (15) montiert ist und das Flanschteil (16A) der rechten Basisstützsäule (16) an dem rechten vorderen vorragenden Teil (5K) des Drehrahmens (5) unter Verwendung eines Befestigungselements (15) montiert ist.

## Revendications

1. Excavateur hydraulique de petite taille comprenant :
une structure de déplacement inférieure automotrice (2) ;
une structure pivotante supérieure (3) qui est montée sur la structure de déplacement inférieure (2) pour être capable de pivoter sur celle-ci ; et
un dispositif avant (4) qui est prévu sur un côté avant de la structure pivotante supérieure (3) pour être capable de se lever et de s'incliner par rapport à celle-ci,
la structure pivotante supérieure (3) incluant :
un châssis pivotant (5) sur un côté avant duquel une extrémité de base du dispositif avant (4) est montée,
un siège de conducteur (9) prévu pour qu'un opérateur s'assoie dessus,
une plaque de plancher (10) qui est prévue sur le châssis pivotant (5) pour être située sur un côté avant du siège de conducteur (9) et qui forme un repose-pieds pour l'opérateur qui est assis sur le siège de conducteur (9),
et
un élément de protection (13) qui est prévu sur le côté avant de la structure pivotante supérieure (3) et qui est configuré pour protéger l'opérateur qui est assis sur le siège de conducteur (9),
**caractérisé en ce que**
le châssis pivotant (5) est doté d'une partie en projection avant gauche (5J) et d'une partie en projection avant droite (5K) qui sont respectivement disposées pour être séparées dans une direction gauche/droite sur un côté avant de la plaque de fond (5A) pour interposer le dispositif avant (4) entre celles-ci et se projeter vers l'avant, et
l'élément de protection (13) inclut :
une colonne de support de base de gauche (14) qui est formée d'un corps en forme de barre s'étendant dans une direction haut/bas et qui a une extrémité inférieure montée sur la partie en projection avant gauche (5J) du châssis pivotant (5),
une colonne de support de base de droite (16) qui est formée d'un corps en forme de barre s'étendant dans la direction haut/bas et qui a une extrémité inférieure montée sur la partie en projection avant droite (5K) du châssis pivotant (5),
une colonne de support intermédiaire de gauche (18) qui est montée sur une extrémité supérieure de la colonne de support de base de gauche (14) via un mécanisme d'ajustement en hauteur de gauche (39) pour être capable d'effectuer un ajustement en hauteur dans la direction haut/bas,
une colonne de support intermédiaire de droite (19) qui est montée sur une extrémité supérieure de la colonne de support de base de droite (16) via un mécanisme d'ajustement en hauteur de droite (47) pour être capable d'effectuer un ajustement en hauteur dans la direction haut/bas, et
un élément formant auvent (20) qui est monté sur une extrémité supérieure de la colonne de support intermédiaire de gauche (18) et sur une extrémité supérieure de la colonne de support intermédiaire de droite (19) respectivement via un mécanisme d'ajustement d'angle (30) et qui se projette au-dessus du siège de conducteur (9) dans un état dans lequel il est possible d'ajuster des angles de montage sur la colonne de support intermédiaire de gauche (18) et sur la colonne de support intermédiaire de droite (19).

2. Excavateur hydraulique de petite taille selon la revendication 1, dans lequel
le mécanisme d'ajustement en hauteur de gauche (39) est capable d'ajuster une position fixe de la colonne de support intermédiaire de gauche (18) sur la colonne de support de base de gauche (14) en une pluralité de paliers dans la direction haut/bas,
le mécanisme d'ajustement en hauteur de droite (47) est capable d'ajuster une position fixe de la colonne de support intermédiaire de droite (19) sur la colonne de support de base de droite (16) en une pluralité de paliers dans la direction haut/bas, et
le mécanisme d'ajustement d'angle (30) est capable d'ajuster un angle de montage de l'élément formant auvent (20) sur la colonne de support intermédiaire de gauche (18) et sur la colonne de support intermédiaire de droite (19) en une pluralité de paliers dans la direction haut/bas.

3. Excavateur hydraulique de petite taille selon la revendication 1, dans lequel le mécanisme d'ajustement d'angle (30) inclut :
un mécanisme d'ajustement d'angle de gauche (30A) qui est prévu entre la colonne de support intermédiaire de gauche (18) et l'élément formant auvent (20) via une tige de connexion (27) pour être capable d'effectuer un ajustement d'angle ; et
un mécanisme d'ajustement d'angle de droite (30B) qui est prévu entre la colonne de support intermédiaire de droite (19) et l'élément formant auvent (20) via la tige de connexion (27) pour être capable d'effectuer un ajustement d'angle.

4. Excavateur hydraulique de petite taille selon la revendication 3, dans lequel
la tige de connexion (27) est formée d'un corps de tige configuré pour connecter la colonne de support intermédiaire de gauche (18) et l'élément formant auvent (20), et la colonne de support intermédiaire de droite (19) et l'élément formant auvent (20), et
l'élément formant auvent (20) inclut deux éléments composés d'un élément formant auvent de gauche (21) qui est situé au niveau du côté du mécanisme d'ajustement d'angle de gauche et qui est supporté par la tige de connexion (27), et d'un élément formant auvent de droite (22) qui est situé au niveau du côté du mécanisme d'ajustement d'angle de droite et qui est supporté par la tige de connexion (27).

5. Excavateur hydraulique de petite taille selon la revendication 1, dans lequel
le mécanisme d'ajustement en hauteur de gauche (39) inclut :
un panneau de gauche (40) qui est monté le long de la colonne de support de base de gauche (14) et dont une extrémité supérieure de celui-ci se projette vers le haut plus que la colonne de support de base de gauche (14) ;
un trou de rainure de guidage de gauche (42) qui est prévu dans le panneau de gauche (40) et qui s'étend dans la direction haut/bas le long de la colonne de support de base de gauche (14) ; et
un élément d'engagement de gauche (45) qui est prévu au niveau de la colonne de support intermédiaire de gauche (18) dans un état dans lequel il est engagé avec le trou de rainure de guidage de gauche (42) et qui est configuré pour guider la colonne de support intermédiaire de gauche (18) dans la direction haut/bas le long du trou de rainure de guidage de gauche (42), et
le mécanisme d'ajustement en hauteur de droite (47) inclut :
un panneau de droite (48) qui est monté le long de la colonne de support de base de droite (16) et dont une extrémité supérieure de celui-ci se projette vers le haut plus que la colonne de support de base de droite (16) ;
un trou de rainure de guidage de droite (49) qui est prévu dans le panneau de droite (48) et qui s'étend dans la direction haut/bas le long de la colonne de support de base de droite (16) ; et
un élément d'engagement de droite (52) qui est prévu au niveau de la colonne de support intermédiaire de droite (19) dans un état dans lequel il est engagé avec le trou de rainure de guidage de droite (49) et qui est configuré pour guider la colonne de support intermédiaire de droite (19) dans la direction haut/bas le long du trou de rainure de guidage de droite (49).

6. Excavateur hydraulique de petite taille selon la revendication 1, dans lequel
l'élément de protection (13) inclut :
une jonction côté colonne de support de gauche (25) qui est prévue au niveau de l'extrémité supérieure de la colonne de support intermédiaire de gauche (18) ;
une jonction côté colonne de support de droite (26) qui est prévue au niveau de l'extrémité supérieure de la colonne de support intermédiaire de droite (19) ;
une tige de connexion (27) qui connecte la jonction côté colonne de support de gauche (25) et la jonction côté colonne de support de droite (26) et qui s'étend dans la direction gauche/droite ;
une jonction côté auvent de gauche (28) qui est prévue au niveau d'une extrémité avant gauche de l'élément formant auvent (20) et dans laquelle une partie d'extrémité de gauche (27A) de la tige de connexion (27) est insérée en rotation ; et
une jonction côté auvent de droite (29) qui est prévue au niveau d'une extrémité avant droite de l'élément formant auvent (20) et dans laquelle une partie d'extrémité de droite (27B) de la tige de connexion (27) est insérée en rotation, et
le mécanisme d'ajustement d'angle (30) inclut :
un trou à broche côté colonne de support de gauche (31, 32) qui est formé dans la jonction côté colonne de support de gauche (25) et qui est disposé sur une circonférence (c) de cercle centrée autour de la tige de connexion (27) ;
un trou à broche côté colonne de support de droite (35, 36) qui est formé dans la jonction côté colonne de support de droite (26) et qui est disposé sur la circonférence (c) de cercle ;
un trou à broche côté auvent de droite (37) qui est formé dans la jonction côté auvent de droite (29) et qui est disposé sur la circonférence (c) de cercle ;
une broche d'engagement de gauche (34) qui définit un angle de montage de la jonction côté auvent de gauche (28) sur la tige de connexion (27) en étant insérée à travers le trou à broche côté colonne de support de gauche (31, 32) et le trou à broche côté auvent de gauche (33) ; et
une broche d'engagement de droite (38) qui définit un angle de montage de la jonction côté auvent de droite (29) sur la tige de connexion (27) en étant insérée à travers le trou à broche côté colonne de support de droite (35, 36) et le trou à broche côté auvent de droite (37), et
des trous à broche sur l'un ou l'autre côté parmi le côté de colonne de support de gauche et droite (31, 32, 35, 36) et le côté d'auvent de gauche et droite (33, 37) sont disposés sur la circonférence (c) de cercle à une pluralité de positions, et des trous à broche sur l'autre côté sont disposés sur la circonférence (c) de cercle à une ou plusieurs positions.

7. Excavateur hydraulique de petite taille selon la revendication 1, dans lequel
des poignées (54) sont prévues au niveau d'un côté d'extrémité supérieure de la colonne de support intermédiaire de gauche (18) et au niveau d'un côté d'extrémité supérieure de la colonne de support intermédiaire de droite (19) respectivement, les poignées (54) étant situées sur un côté inférieur du mécanisme d'ajustement d'angle (30), et étant saisies par un opérateur lorsque celui-ci monte et descend du siège de conducteur (9).

8. Excavateur hydraulique de petite taille selon la revendication 1, dans lequel
des parties de bride (14A, 16A) sont prévues au niveau de l'extrémité inférieure de la colonne de support de base de gauche (14) et au niveau de l'extrémité inférieure de la colonne de support de base de droite (16) respectivement, et
la partie de bride (14A) de la colonne de support de base de gauche (14) est montée sur la partie en projection avant gauche (5J) du châssis pivotant (5) en utilisant un élément d'attache (15) et la partie de bride (16A) de la colonne de support de base de droite (16) est montée sur la partie en projection avant droite (5K) du châssis pivotant (5) en utilisant un élément d'attache (15).
